# EUROPEAN PATENT SPECIFICATION

(11) **EP 1 038 736 B1**
(45) Date of publication and mention of the grant of the patent: **18.08.2004**
(21) Application number: 00101795.3
(22) Date of filing: 28.01.2000
(51) Int. Cl.: B60R 21/16, B60R 21/20

(54) **Head protecting air bag system**
Kopfschützendes Airbagsystem
Système de protection de la tête par coussin gonflable

(30) Priority: 25.03.1999 JP 8142199; 28.05.1999 JP 15044999; 28.05.1999 JP 15048899
(43) Date of publication of application: 27.09.2000
(73) Proprietor: TOYODA GOSEI CO., LTD., Nishikasugai-gun Aichi-ken (JP)
(72) Inventor: Totani, Chiharu, Gifu-shi, Gifu-ken (JP); Kobayashi, Fumitake, Ichinomiya-shi, Aichi-ken (JP); Nagai, Yutaka, Ichinomiya-shi, Aichi-ken (JP); Tajima, Hiroyuki, Chiryu-shi, Aichi-ken (JP); Osawa, Yasuyuki, Nagoya-shi, Aichi-ken (JP)
(74) Representative: Pellmann, Hans-Bernd, Dipl.-Ing.

(56) References cited:
- EP-A- 0 855 315
- EP-A- 0 878 363
- EP-A- 0 900 704
- US-A- 5 863 068
- US-A- 5 884 937

## Description

The present invention relates to a head protecting air bag system according to the preamble of claim 1.

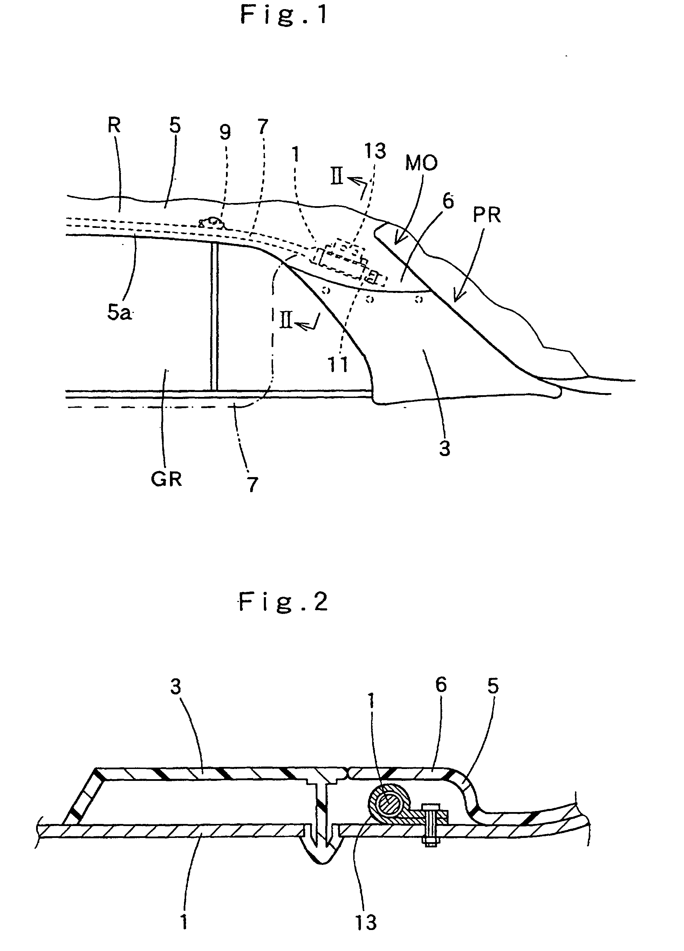

In the prior art, there is a head protecting air bag system M0, as shown in Figs. 1 and 2. This air bag system M0 is provided with an air bag 7 and an inflator 11. This inflator 11 is attached to a rear pillar portion PR on the interior side of a vehicle and supplies an inflating gas to the air bag 7. This air bag 7 is housed, folded, from the rear pillar portion PR to a roof side rail portion R on the interior side.

The inflator 11 of the air bag system M0 is mounted on an inner panel 1 of the body of the rear pillar portion PR. A roof interior member 5 is provided with an extension 6, which extends to an upper portion of the rear pillar portion PR. The inflator 11 is covered with extension 6. The rear pillar portion PR has the inner panel 1 and an interior side rear pillar garnish 3. This rear pillar garnish 3 is mounted on the inner panel 1 and covers the interior side of the rear pillar portion PR from the lower edge portion of the extension 6. Reference numeral 9 in Fig. 1 designates a mounting bracket. This bracket 9 mounts the air bag 7 onto the inner panel 1 of the roof side rail portion R. A member designated by 13 in Figs. 1 and 2 is also a mounting bracket. This bracket 13 mounts the inflator 11 on the inner panel 1 of the rear pillar portion PR.

In this air bag system M0, the air bag 7 first warps, when inflated and expanded, at a lower edge 5a of the roof interior member 5 towards the interior side. Moreover, the air bag 7 inflates and expands to cover a rear side windshield GR.

In the air bag system M0 of the prior art, however, the air bag 7 fails, when inflated and expanded, to cover the upper portion of the rear pillar portion PR.

US-A-5 884 937 discloses a generic head protecting air bag system comprising an inflator for supplying an inflating gas to an air bag, wherein said air bag is housed in a folded shape from the rear pillar portion on the vehicle interior side to a roof side rail portion, and includes a portion to be inflated and expanded so as to cover the upper portion on the interior side of a rear pillar garnish, said rear pillar garnish includes a door portion.

It is the object of the present invention to provide a head protecting air bag system in which an air bag covers the interior side upper portion of a rear pillar portion, even if an inflator is mounted on this rear pillar portion.

The object is solved by the head protecting air bag system having the features of claim 1.

In the head protecting air bag system according to the invention, the rear pillar garnish is halved into the front panel portion and the rear panel portion, which are mounted on the rear pillar portion body. When the air bag is inflated and expanded in the rear pillar portion, the door portion of the rear panel portion is pushed and opened by the air bag. Then, a portion of the air bag covers the interior side upper portion of the front panel portion of the rear pillar garnish. Specifically, the air bag is inflated and expanded to cover bag the interior side upper portion of the rear pillar portion with a portion of the air bag.

In the front panel portion, a cover portion, which is disposed on the rear edge side and in the area for the air bag to be inflated and expanded therein, prevents the air bag from invading the space between the rear pillar portion body and the front panel portion. As a result, the air bag can cover, when inflated and expanded, the interior side of the front panel portion without invading the space between the rear pillar portion body and the front panel portion.

In the head protecting air bag system according to the the invention, even if the inflator is mounted on the rear pillar portion, the air bag can be smoothly inflated and expanded to cover the interior side upper portion of the rear pillar portion.

The air bag system may be modified to include the following structure. Preferably, the front panel portion includes a root portion and a skin for covering the surface of the interior side of the root portion. The skin includes an extension extending backward from the cover portion. The extension is attached to the rear pillar portion body while covering the exterior side of the folded air bag.

In this construction, the folded air bag is covered not only at the front side, but also the body side of the rear pillar portion with the extension. As a result, the air bag more smoothly protrudes, when inflated and expanded, to the upper side of the front panel portion.

The air bag system may be modified to include the following structure. Preferably, the cover portion includes a front wall portion for covering the front of the folded air bag, a bottom portion for covering the vehicle exterior side of the air bag, and a rear wall portion for covering the back of the air bag.

In this construction, the folded air bag is covered at its front and back with the front and rear wall portions of the cover portion. In other words, the air bag is regulated, when inflated and expanded, from expanding backward by the rear wall portion. This facilitates the forward protrusion of the air bag.

In this construction, the front wall portion is sloped to spread to the interior side. Thus, the air bag can be guided by the sloped front wall portion to protrude more easily to the interior side.
Fig. 1 is a front elevation of the vicinity of a rear pillar garnish and shows a head protecting air bag system of the prior art as viewed from the compartment of an automobile;
Fig. 2 is a section along a line II - II of Fig. 1;
Fig. 3 is a front elevation showing a head protecting air bag system of a first embodiment of the invention as viewed from the compartment of an automobile;
Fig. 4 is a section along a line IV - IV of Fig. 3;
Fig. 5 is an enlarged section of a portion V of Fig. 4;
Fig. 6 is a section along a line VI - VI of Fig. 3;
Fig. 7 is a front elevation showing a head protecting air bag system of a second embodiment, as viewed from the compartment of an automobile in the vicinity of a rear pillar garnish;
Fig. 8 is a section along a line VIII - VIII of Fig. 7;
Fig. 9 is a section along a line IX - IX of Fig. 7;
Fig. 10 is a front elevation showing a head protecting air bag system of a third embodiment from the compartment of an automobile in the vicinity of a rear pillar garnish;
Fig. 11 is a section along a line XI - XI of Fig. 10;
Fig. 12 is a front elevation showing a head protecting air bag system of a first comparative example as viewed from the compartment of an automobile;
Fig. 13 is a section along a line XIII - XIII of Fig. 12;
Fig. 14 is a section along a line XIV - XIV of Fig. 12;
Fig. 15 is a front elevation of a rear pillar garnish to be used in the first comparative example;
Fig. 16 is a perspective back elevation of the rear pillar garnish to be used in the first comparative example;
Fig . 17 is a perspective view of a portion of a body side inner panel, on which the rear pillar garnish of the first comparative example is mounted;
Fig. 18 is an exploded perspective view of a portion of a rear pillar garnish and an inner panel of a second comparative example;
Fig. 19 is a section showing the state in which the rear pillar garnish of the first comparative example is mounted;
Fig. 20 is an exploded perspective view of a portion of a rear pillar garnish and a case of a third comparative example
Fig. 21 is a section showing the mounted state of the rear pillar garnish of the third comparative example and shows a mounted portion of an inflator;
Fig. 22 is a front elevation showing a head protecting air bag system of a fourth comparative example as viewed from the compartment of an automobile;
Fig. 23 is a section along a line XXIII - XXIII of Fig. 22;
Fig. 24 is a section along a line XXIV - XXIV of Fig. 22;
Fig. 25 is a back elevation of a rear pillar garnish to be used in the fourth comparative example;
Fig. 26 is a perspective view of a portion on the side of an inner panel, on which the rear pillar garnish of the fourth comparative example is mounted;

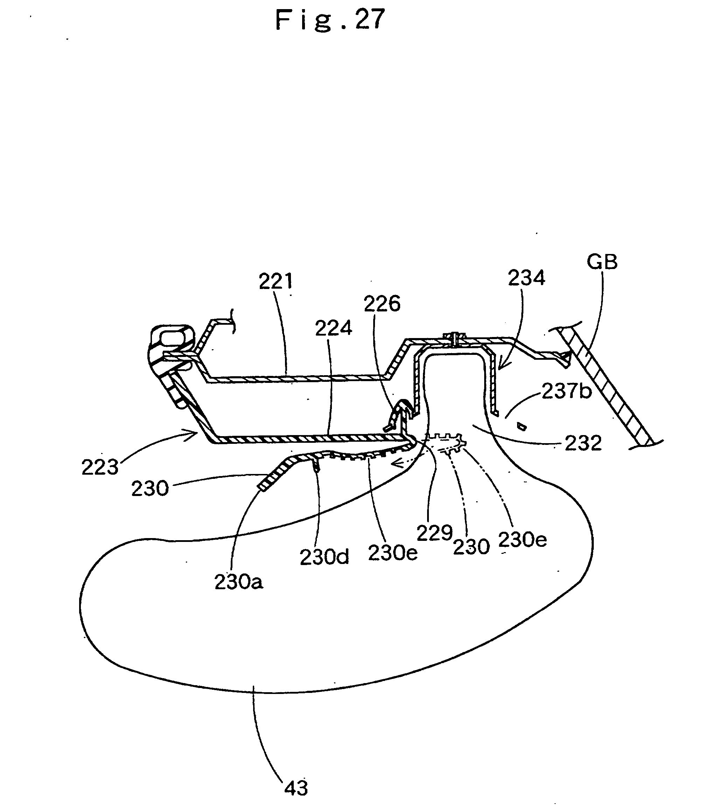

Fig. 27 is a section at the time when the air bag of the fourth comparative example is inflated and expanded;
Fig. 28 is a front elevation of the state in which the door portion of the rear pillar garnish of the fourth comparative example is opened;
Fig. 29 is a front elevation showing a head protecting air bag system of a fifth comparative example, as viewed from the compartment of an automobile;
Fig. 30 is a section along a line XXX - XXX of Fig. 29;
Fig. 31 is a back elevation of a rear pillar garnish of the fifth comparative example; and
Fig. 32 is a front elevation of the state in which the door portion of the rear pillar garnish of the fifth comparative example is opened.

The invention will be described in connection with its embodiments and comparative example not belonging to the invention with reference to the accompanying drawings. Here, the invention should not be limited to the embodiments.

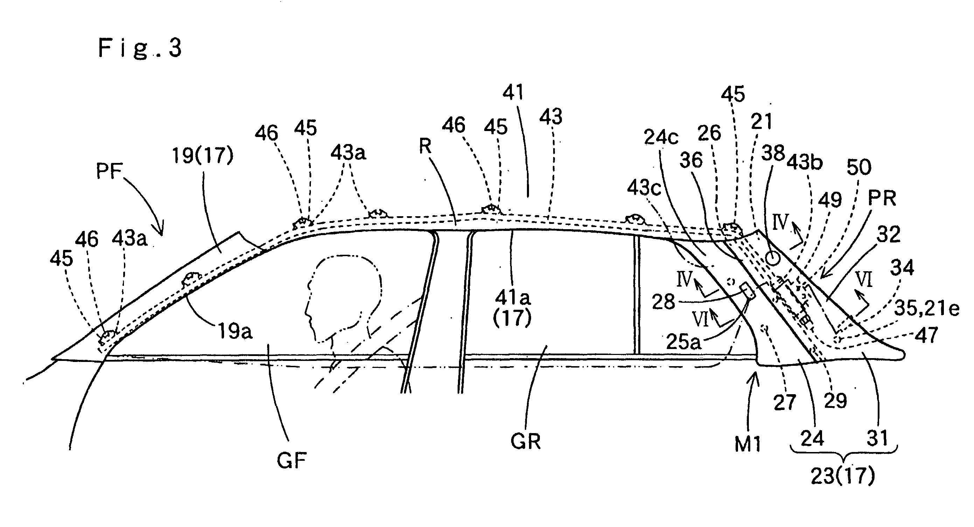

A head protecting air bag system M1 of a first embodiment is provided, as shown in Fig. 3, with an air bag 43, an inflator 47, and an air bag cover 17. The air bag 43 is housed in a folded shape in a rear pillar portion PR, a roof side rail portion R, and a front pillar portion PF on the compartment side of an automobile. The inflator 47 supplies an inflating gas to the air bag 43. The air bag cover 17 covers the interior side of the folded air bag 43. In the embodiment, the air bag cover 17 includes a rear pillar garnish 23, a lower edge 41a of a roof interior member 41, and a front pillar garnish 19.

The air bag 43 includes mounting portions 43a and a joint cylinder portion 43b. A plurality of mounting portions 43a are arranged on the upper edge side to attach mounting brackets 45 of a sheet metal individually. The joint cylinder portion 43b is mounted around the inflator 47. The air bag 43 is mounted on an inner panel 21 by the mounting brackets 45 and mounting bolts 46. The inner panel 21 forms the body of the rear pillar portion PR. Moreover, the inner panel 21 extends not only to the rear pillar portion PR, but also to the roof side rail portion R and the front pillar portion PF.

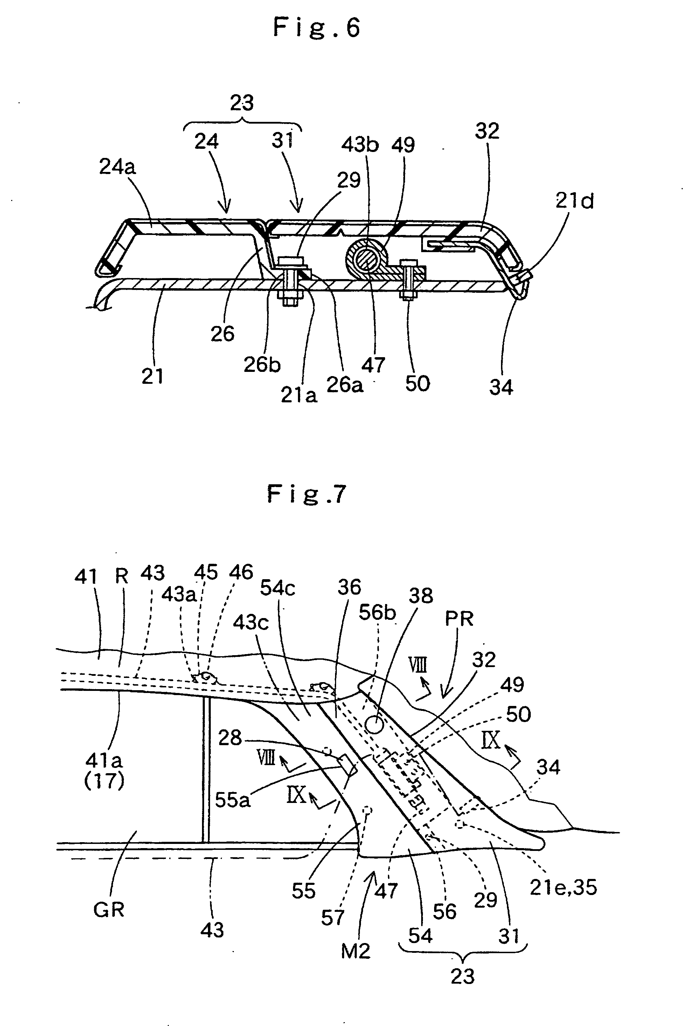

The inflator 47 has a cylindrical shape and is mounted on the inner panel 21, as shown in Figs. 3 and 6, by a mounting bracket 49. Around the inflator 47, the joint cylinder portion 43b of the air bag 43 is mounted. Around the joint cylinder portion 43b, the mounting bracket 49 of a sheet metal is mounted. This mounting bracket 49 is mounted on the inner panel 21 by means of two mounting bolts 50. The inflator 47 is mounted on the inner panel 21 in the vicinity of the vertically intermediate position of the rear pillar portion PR.

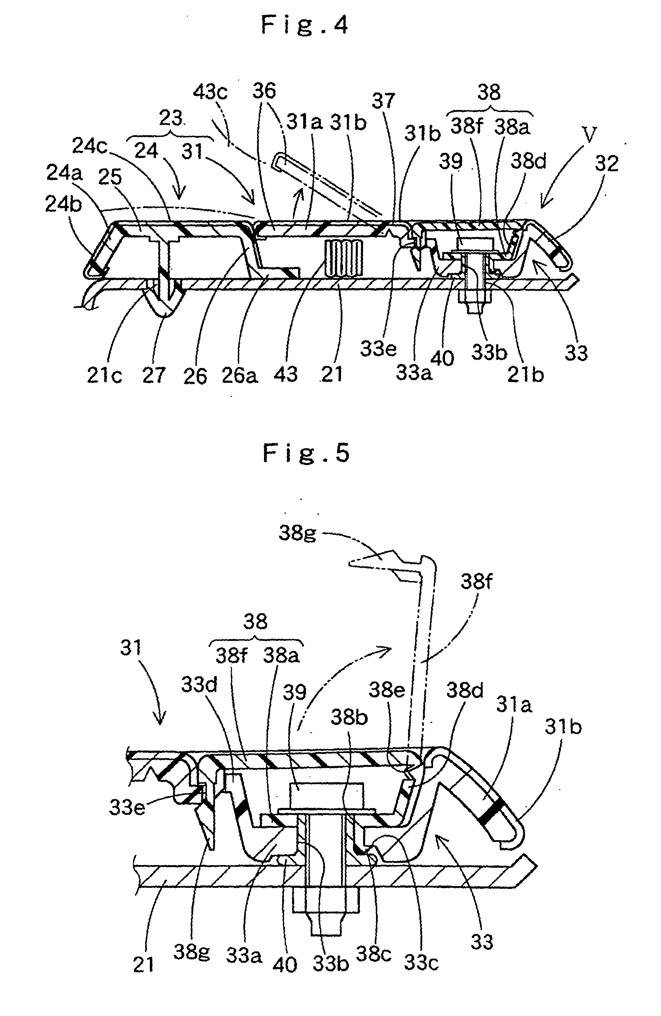

This rear pillar portion PR is provided, as shown in Figs. 4 and 6, with the inner panel 21 and the rear pillar garnish 23. The inner panel 21 forms the body of the rear pillar portion PR. The garnish 23 covers the interior side of the inner panel 21.

The rear pillar garnish 23 includes a front panel portion 24 on the front edge side and a rear panel portion 31 on the rear edge side. These front and rear panel portions 24 and 31 are individually provided with root portions 24a and 31a and skins 24b and 31b. The root portions 24a and 31a are individually mounted and attached to the inner panel 21, and are made of a synthetic resin such as a poly-olefin type thermoplastic elastomer. The skins 24b and 31b are bonded to the surface sides of the root portions 24a and 31a, and are made of a synthetic resin, such as a poly-olefin type thermoplastic elastomer and a flexible polyvinyl chloride or a fabric.

Here, the front pillar garnish 19 and the roof interior member 41 of the air bag cover 17 are also mounted on the inner panel 21, which extends to the roof side rail portion R and the front pillar portion PF.

Moreover, the front panel portion 24 is provided with a body portion 25 and a cover portion 26. This cover portion 26 is arranged on the rear edge side of the body portion 25 and in the area for the air bag 43 to be inflated and expanded therein. The cover portion 26 prevents the air bag 43 from invading, when inflated and expanded, into the space between the inner panel 21 and the front panel portion 24. The body portion 25 is provided with two retaining legs 27. These retaining legs 27 are individually fit into retaining holes 21c of the inner panel 21 to retain the peripheral edges of the retaining holes 21c.

In this embodiment, the cover portion 26 is formed so to cover the rear edge of the body portion 25. Moreover, the cover portion 26 is constructed to extend from the rear edge of the body portion 25 toward the inner panel 21. At the leading end of the cover portion 26, a flanged portion 26a which extends rearward along the inner panel 21, is formed. This flanged portion 26a is provided with two mounting holes 26b. Into the mounting holes 26b, there are individually inserted mounting bolts 29. These bolts 29 mount the front panel portion 23 onto the inner panel 21.

On the other hand, the front panel portion 24 is provided with an opening 25a (as shown in Fig. 3) for exposing a room lamp 28 to the compartment.

The rear panel portion 31 is provided, as shown in Figs. 3 to 6, with a body portion 32 on the rear edge side and a door portion 36 on the front edge side. The door portion 36 is arranged in the area for the air bag 43 to be inflated and expanded therein. In this embodiment, the door portion 36 is arranged to cover the front edge side of the body portion 32. A thin hinged portion 37 is formed between the door portion 36 and the body portion 32. On the other hand, a mounting boss portion 33 is formed on the rear edge side of the upper portion of the body portion 32. In the rear edge side of the lower portion of the body portion 32, the retaining pawls 34 of a sheet metal are buried. These retaining pawls 34 are inserted into retaining holes 21d of the inner panel 21 to retain the peripheral edges of the retaining holes 21d. On the lower side of the body portion 32, there are formed retaining legs 35. These retaining legs 35 are inserted into retaining holes 21e of the inner panel 21 to retain the peripheral edges of the retaining holes 21e.

The mounting boss portion 33 provides a portion for mounting the rear panel portion 31 onto the inner panel 21 by a mounting bolt 39, as shown in Figs. 4 and 5. This mounting bolt 39 is inserted into a mounting hole 21b formed to have a nut, and is fastened onto the inner panel 21. The mounting boss portion 33 is provided with a mounting hole 33b in a recessed bottom portion 33a, and a retaining hole 33e in a stepped portion 33d. In the mounting hole 33b, the retaining legs 38c of a cap 38 and a flanged sleeve 40 are fit.

This flanged sleeve 40 is made of a metal to admit the mounting bolt 39. The sleeve 40 is arranged to retain the fastening strength of the mounting boss portion 33.

The cap 38 is made of a synthetic resin such as a polyolefin-type thermoplastic elastomer. This cap 38 is provided with a base portion 38a and a cover portion 38f. The base portion 38a is provided at its center with a through-hole 38b for inserting the sleeve 40. On the lower side of the base portion 38a, there are formed the plurality of retaining legs 38c. These retaining legs 38c individually retain the circumferential edges of the mounting holes 33b within the lower side of the boss bottom portion 33a. The base portion 38 is provided with a joint lever portion 38d extending upward from the outer peripheral edge. At the upper end of the joint lever portion 38d, a hinged portion 38e, which is made thin and bent, is formed. This hinged portion 38e is jointed to the cover portion 38f. This cover portion 38f is formed to cover the opening of the boss portion 33. On the lower face of the outer peripheral edge of the cover portion 38f, there is formed a retaining leg 38g. This retaining leg 38g is inserted into the retaining hole 33e to retain the peripheral edges of the retaining hole 33e.

The mounting boss portion 33 is mounted on the inner panel 21 in the following manner. First, the individual retaining legs 38c are retained on the circumferential edges of the mounting holes 33b, and the sleeve 40 is fit upward between the individual retaining legs 38c. At this time, the cap 38 and the sleeve 40 are assembled, without falling or dropping, with the boss portion. As a result, until it is mounted on the inner panel 21, the cap 38 or the like would not be lost. When the boss portion 33 is mounted on the inner panel 21, the mounting bolt 39 is inserted into the sleeve 40 and the mounting hole 21b, and is fastened together with the inner panel 21. After this, the hinged portion 38e is warped to retain the retaining leg 38g on the peripheral edges of the retaining hole 33e. Then, the cover portion 38f of the cap 38 can cover the opening of the boss portion 33 to hide the bolt 39.

The assembly of the head protecting air bag system M1 of the first embodiment with the vehicle is now described. First, the air bag 43 is folded to mount the mounting brackets 45 onto the individual mounting portions 43a. On the other hand, the inflator 47 is inserted into the joint cylinder portion 43b to mount the mounting bracket 49. In order to prevent a folding collapse which would restore the original shape, the folded air bag 43 is wrapped at a predetermined portion with a not-shown tape member. As a result, the air bag assembly is prepared.

Next, the mounting bolts 46 and 50 are used to attach the individual mounting brackets 45 and 49 onto the inner panel 21. On the inner panel 21, the front pillar garnish 19, the roof interior member 41 and the rear pillar garnish 23 are mounted to form the air bag cover 17. Then, the head protecting air bag system M1 can be assembled with the vehicle.

The mounting of the rear pillar garnish 23 onto the inner panel 21 is started by retaining the individual retaining legs 27 of the front panel portion 24 on the peripheral edges of the retaining holes 21c of the inner panel 21. On the other hand, the mounting bolts 29 are inserted into the individual mounting holes 26b of the cover portion flanged portion 26a and the mounting holes 21a of the inner panel 21, and are fastened to the inner panel 21 to mount the front panel portion 24 onto the inner panel 21. The mounting holes 21a are constructed by mounting nuts on the inner panel 21. The room lamp 28 is mounted in advance at a predetermined position of the inner panel 21.

Next, the retaining pawls 34 and the retaining legs 35 of the rear panel portion 31 are retained on the peripheral edges of the retaining holes 21d and 21e of the inner panel 21. On the other hand, the cover portion 38f of the cap 38 is opened, and the mounting bolt 39 is fastened to the inner panel 21 through the mounting hole 33b of the mounting boss portion 33 and through the through hole 38b, the sleeve 40, and the mounting hole 21b of the cap base portion 38a. Moreover, the retaining leg 38g is retained on the peripheral edges of the retaining hole 33e to cover the opening of the mounting boss portion 33 with the cover portion 38f. As a result, the rear pillar garnish 23 can be attached onto the inner panel 21, which is the body of the rear pillar portion PR.

After the head protecting air bag system M1 has been mounted on the vehicle, the inflating gas flows into the air bag 43 if the inflator 47 is activated. Then, the air bag 43 pushes and opens the lower edges 19a and 41a of the front pillar garnish 19 and the roof interior member 41 in the air bag cover 17. On the other hand, the air bag 43 pushes and opens the door portion 36 of the rear panel portion 31 of the rear pillar garnish 23. As indicated by double-dotted lines in Figs. 3 and 4, the air bag 43 then covers the portions of the front and rear side windshields GF and GR, and an upper portion 24c of the front panel portion 24 in the rear pillar portion PR.

In the head protecting air bag system M1 of the first embodiment, the rear pillar garnish 23 is halved into the front panel portion 24 and the rear panel portion 31, which are mounted on the inner panel 21, which is the rear pillar portion body. When the air bag 43 is inflated and expanded, in the rear pillar portion PR, the door portion 36 of the rear panel portion 31 is pushed and opened by the air bag 43. Then, the air bag 43 is inflated and expanded that a portion 43c on the rear side of the air bag 43 covers the interior side of the front panel portion 24 of the rear pillar garnish 23. As a result, the upper portion 24c on the interior side of the rear pillar portion PR is covered with the portion 43c of the air bag 43.

In the front panel portion 24 on the rear edge side and in the area for the air bag 43 to be inflated and expanded therein, the cover portion 26 for preventing invasion of the air bag 43 into the space between the inner panel 21 and the front panel portion 24 is formed. The air bag 43 can cover, when inflated and expanded, the inner portion 24c of the front panel portion 24 without invading into the space between the inner panel 21 and the front panel portion 24.

In the head protecting air bag system M1 of the first embodiment, therefore, the air bag 43 can be smoothly inflated and expanded without any hindrances to cover the upper portion 24c of the rear pillar portion PR, even if the inflator 47 is mounted on the rear pillar portion PR.

In a head protecting air bag system M2 of a second embodiment, as shown in Figs. 7 to 9, a front panel portion 54 has a construction different from that of the front panel portion 24 of the first embodiment. Moreover, the air bag system M2 is similar to that of the first embodiment in the remaining constructions of the rear panel portion 31, the air bag 43, the inflator 47, the mounting brackets 45 and 49, and so on. Therefore, descriptions of these similar portions will be omitted and these elements will be designated by the same common reference numerals.

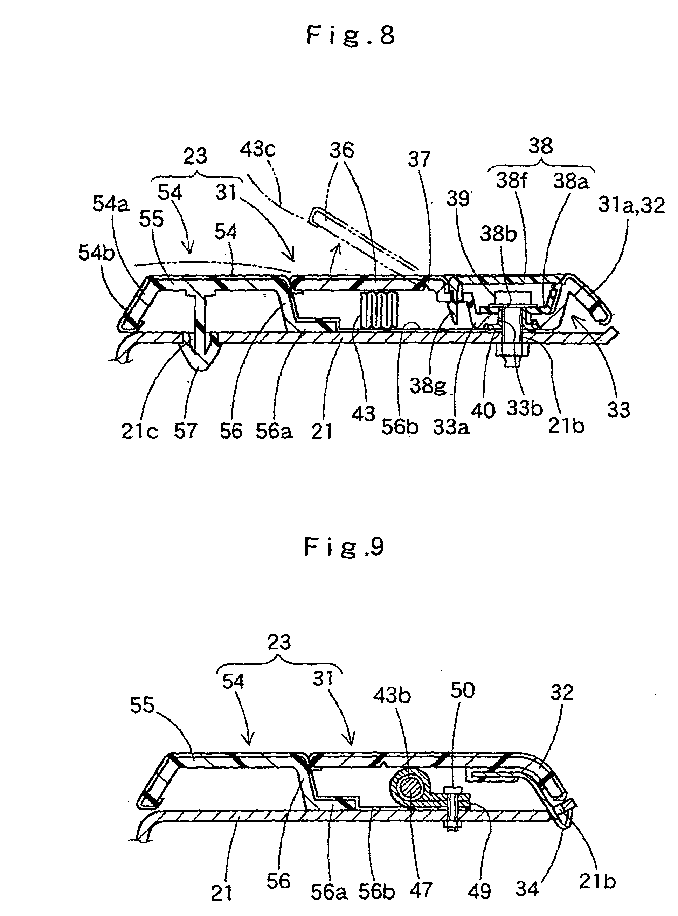

Moreover, the front panel portion 54 is provided with a body portion 55 and a cover portion 56, as shown in Figs. 7 and 8. This cover portion 56 is arranged on the rear edge side of the body portion 55 and in the area for the air bag 43 to be inflated and expanded therein. The cover portion 56 prevents the air bag 43 from invading, when inflated and expanded, into the space between the inner panel 21 and the front panel portion 54. The body portion 55 is provided with two retaining legs 57. These retaining legs 57 are individually fit in retaining holes 21c of the inner panel 21 to retain the peripheral edges of the retaining holes 21c. On the other hand, the body portion 55 is provided with an opening 55a for arranging the room lamp 28.

In the case of the second embodiment, the cover portion 56 is formed all over the rear edge of the body portion 55. Moreover, the cover portion 56 is constructed so as to extend from the rear edge of the body portion 55 toward the inner panel 21. At the leading end of the cover portion 56, a flanged portion 56a which extends rearward along the inner panel 21, is formed. A skin 54b that is bonded to the surface side of a root portion 54a is provided at its upper side portion with an extension 56b. This extension 56b is extended to be between the air bag 43 or the mounting bracket 49 and the inner panel 21. The extension 56b is fastened together with the rear panel portion 31 and the mounting bracket 49 by the mounting bolts 39 and 50. The lower side of the flanged portion 56a is mounted and attached, as in the first embodiment, to the inner panel 21 by the mounting bolts 29. Specifically, the front panel portion 54 of the second embodiment is mounted on the inner panel 21 by means of the retaining legs 57 and 57 and the mounting bolts 29, 39 and 50.

The mounting of the head protecting air bag system M2 of the second embodiment on the vehicle is started by preparing the air bag assembly as in the first embodiment.

Then, the individual retaining legs 57 are retained on the peripheral edges of the retaining holes 21c, and the front panel portion 54 is mounted onto the inner panel 21 by the mounting bolts 29. Here, the room lamp 28 is mounted in advance at a predetermined position of the inner panel 21.

Next, the mounting bolts 46 and 50 are used to attach the individual mounting brackets 45 and 49 to the inner panel 21. As a result, the air bag assembly is attached to the inner panel 21. At this time, a portion of the extension 56b of the cover portion 56 in the front panel portion 54 is fastened together with the mounting bracket 49 on the inner panel 21. On the inner panel 21, the front pillar garnish 19, the roof interior member 41 and the rear panel portion 31 of the rear pillar garnish 23 are mounted to form the air bag cover 17. As a result, the head protecting air bag system M2 can be assembled with the vehicle.

The mounting of the rear panel portion 31 onto the inner panel 21 is started by retaining the retaining pawls 34 and the retaining legs 35 on the peripheral edges of the retaining holes 21d and 21e of the inner panel 21. On the other hand, the cover portion 38f of the cap 38 is opened, and the mounting bolt 39 is fastened with the inner panel 21 through the mounting hole 33b of the mounting boss portion 33 and through the through-hole 38b, the sleeve 40, and the mounting hole 21b of the cap base portion 38a. The retaining leg 38g is retained on the peripheral edges of the retaining hole 33e to cover the opening of the mounting boss portion 33 with the cover portion 38f. As a result, the rear panel portion 31 can be attached to the inner panel 21 or the body of the rear pillar portion PR. At this time, a portion of the extension 56b of the cover portion 56 in the front panel portion 54 is fastened together with the mounting boss portion 33 onto the inner panel 21 by the mounting bolt 39.

After the head protecting air bag system M2 has been mounted on the vehicle, the inflating gas flows into the air bag 43 if the inflator 47 is activated. Then, the air bag 43 pushes and opens the lower edges 19a and 41a of the front pillar garnish 19 and the roof interior member 41 in the air bag cover 17. On the other hand, the air bag 43 pushes and opens the door portion 36 of the rear panel portion 31 of the rear pillar garnish 23. As indicated by a double-dotted line in Figs. 7 and 8, the air bag 43 then covers the front and rear side windshields GR and an upper portion 54c of the front panel portion 54 in the rear pillar portion PR.

More specifically, in the head protecting air bag system M2 of the second embodiment, too, the rear pillar garnish 23 is halved into the front panel portion 54 and the rear panel portion 31, which are mounted on the inner panel 21, which is the rear pillar portion body. When the air bag 43 is inflated and expanded, in the rear pillar portion PR, the door portion 36 of the rear panel portion 31 is pushed and opened by the air bag 43 as in the first embodiment. Then, the air bag 43 is inflated and expanded such that the portion 43c on the rear side of the air bag 43 covers the interior side of the front panel portion 54 of the rear pillar garnish 23. As a result, the upper portion 54c on the interior side of the rear pillar portion PR is covered with the portion 43c of the air bag 43.

When the air bag 43 is inflated and expanded in the front panel portion 54 on the rear edge side and in the area for the air bag 43 to be inflated and expanded therein, the cover portion 56 for preventing the invasion of the air bag 43 into the space between the inner panel 21 and the front panel portion 54 is formed. Therefore, the air bag 43 can cover the inner portion 54c of the front panel portion 54 without invading into the space between the inner panel 21 and the front panel portion 54.

In the head protecting air bag system M2 of the second embodiment, the air bag 43 can be smoothly inflated and expanded without any hindrance to cover the upper portion 54c of the rear pillar portion PR, even if the inflator 47 is mounted on the rear pillar portion PR. In the second embodiment, the rear portion 43c of the folded air bag 43 is covered at not only its front side, but also at the side of the inner panel 21 with the rearward extension 56b of the cover portion 56 of the front panel portion 54. As a result, the air bag 43 can smoothly protrude, when inflated and expanded, toward the upper portion 54c of the front panel portion 54.

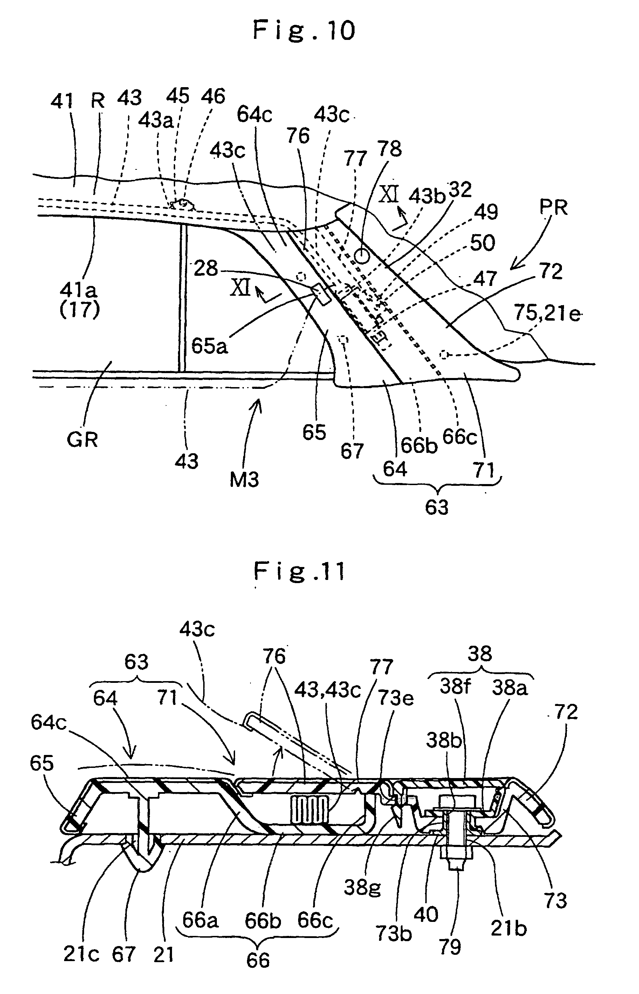

In a head protecting air bag system M3 of a third embodiment, as shown in Figs. 10 and 11, a cover portion 66 of a front panel portion 64 covers the back side of the rear portion 43c of the folded air bag 43. Specifically, the front panel portion 64 of a rear pillar garnish 63 comprises a body portion 65 and the cover portion 66. This cover portion 66 is extended from the rear edge side of the body portion 65 and arranged in the area for the air bag 43 to be inflated and expanded therein. The cover portion 66 is provided with a front wall portion 66a, a bottom portion 66b, and a rear wall portion 66c. The front wall portion 66a is extended along a backward slope from the rear edge side of the body portion 65 toward the inner panel 21. The bottom portion 66b extends backward from the end portion of the front wall portion 66a. The rear wall portion 66c extends from the rear edge of the bottom portion 66b to the vehicle interior side. And, the rear wall portion 66c covers the folded air bag back portion 43c and the back side of the inflator 47. On the other hand, the rear wall portion 66c abuts at its leading end against a body portion 72 of a rear panel portion 71. This abutment is located on the back side of a later-described hinged portion 77. Here, the cover portion 66 is formed all over the rear edge of the body portion 65. On the other hand, the front panel portion 64 is provided with an opening 65a for exposing the room lamp 28 to the compartment.

In the front panel portion 64, two retaining legs 67 are retained on the peripheral edges of the retaining holes 21c of the inner panel 21. By the mounting bolts 50 for mounting the mounting bracket 49 on the inner panel 21, on the other hand, the bottom portion 66b of the cover portion 66 is fastened together with the bracket 49 on the inner panel 21.

The rear panel portion 71 is provided with the body portion 72 on the rear edge side and a door portion 76. The door portion 76 is arranged on the front edge side of the body portion 72 and in the area for the air bag 43 to be inflated and expanded therein. In the case of the embodiment, the door portion 76 is arranged exclusively on the upper side of the front edge side of the body portion 72. The thin hinged portion 77 is formed between the door portion 76 and the body portion 72. The hinged portion 77 is arranged from the upper edge side of the rear panel portion 71 to the vicinity of the vertical intermediate portion of the rear panel portion 71. On the other hand, a mounting boss portion 73 is formed on the rear edge side of the upper portion of the body portion 72. On the rear edge side, the retaining leg 75 is formed. This retaining leg 75 is inserted into retaining hole 21e of the inner panel 21 to retain the peripheral edge of the retaining hole 21e.

With the mounting boss portion 73, as in the first embodiment, the cap 38 and the sleeve 40 are assembled. The mounting boss portion 73 provides a portion for attaching the rear panel portion 71 on the inner panel 21 by the mounting bolt 79 inserted into the mounting hole 21b of the inner panel 21.

The mounting of the head protecting air bag system M3 of the third embodiment onto the vehicle is started by preparing the air bag assembly as in the second embodiment. Then, the individual retaining legs 67 are retained on the peripheral edges of the retaining holes 21c, and the front panel portion 64 is mounted on the inner panel 21. The room lamp 28 is mounted in advance at a predetermined position of the inner panel 21.

Next, by the mounting bolts 46 and 50, the individuals mounting brackets 45 and 49 are attached to the inner panel 21 to mount the air bag assembly on the inner panel 21. At this time, the bottom portion 66b of the cover portion 66 in the front panel portion 64 is fastened together with the mounting bracket 49 on the inner panel 21. On the inner panel 21, moreover, the front pillar garnish 19, the roof interior member 41 and the rear panel portion 71 of the rear pillar garnish 63 are mounted as the air bag cover 17. Thus, the head protecting air bag system M3 can be assembled with the vehicle.

The mounting of the rear panel portion 71 onto the inner panel 21 is started by retaining the retaining leg 75 on the peripheral edge of the retaining hole 21e of the inner panel 21. On the other hand, the cover portion 38f of the cap 38 is opened, and the mounting bolt 79 is fastened on the inner panel 21 through the mounting hole 73b of the mounting boss portion 73, and the through-hole 38b and the sleeve 40 of the cap base portion 38a, and the mounting hole 21b of the inner panel 21. Moreover, the retaining leg 38g is retained on the peripheral edge of retaining hole 73e to cover the opening of the mounting boss portion 73 with the cover portion 38f. As a result, the rear panel portion 71 can be attached to the inner panel 21, which is the body of the rear pillar portion PR.

After the head protecting air bag system M3 has been mounted on the vehicle, the inflating gas flows into the air bag 43 if the inflator 47 is activated. Then, the air bag 43 pushes and opens the lower edges 19a and 41a of the front pillar garnish 19 and the roof interior member 41 in the air bag cover 17. On the other hand, the air bag 43 pushes and opens the door portion 76 of the rear panel portion 71 of the rear pillar garnish 63. As indicated by a double-dotted line in Figs. 9 and 10, the air bag 43 then covers the front and rear side windshields GR and an upper portion 64c of the front panel portion 64 in the rear pillar portion PR.

Therefore, in the head protecting air bag system M3 of the third embodiment, the rear pillar garnish 63 is halved into the front panel portion 64 and the rear panel portion 71, which are mounted on the inner panel 21, which is the rear pillar portion body. When the air bag 43 is inflated and expanded, therefore, in the rear pillar portion PR, the door portion 76 of the rear panel portion 71 is pushed and opened by the air bag 43, as in the first and second embodiments. Then, the air bag 43 is inflated and expanded such that the portion 43c on the rear side of the air bag 43 covers the interior portion 64c of the front panel portion 64 of the rear pillar garnish 63. As a result, the upper portion 64c of the rear pillar portion PR is covered with the portion 43c of the air bag 43.

When the air bag 43 is inflated and expanded in the front panel portion 64 on the rear edge side and in the area for the air bag 43 to be inflated and expanded therein, the cover portion 66 for preventing the invasion of the air bag 43 into the space between the inner panel 21 and the front panel portion 64 is formed. Therefore, the air bag 43 can cover the interior side of the front panel portion 64 without invading into the space between the inner panel 21 and the front panel portion 64.

In the head protecting air bag system M3 of the third embodiment, therefore, the air bag 43 can be smoothly inflated and expanded without any hindrance to cover the upper portion 64c of the rear pillar portion PR, even if the inflator 47 is mounted on the rear pillar portion PR.

In the third embodiment, the rear portion 43c of the folded air bag 43 is covered at its front and back with the front wall portion 66a and the rear wall portion 66c of the cover portion 66. When the air bag 43 is inflated and expanded, its backward expansion is regulated by the rear wall portion 66c. This facilitates the forward protrusion of the air bag 43. On the front side of the folded air bag rear portion 43c, the air bag 43 easily protrudes into the compartment by the sloped front wall portion 66a. As a result, the rear portion 43c of the air bag 43 smoothly protrudes toward the upper portion 54c of the front panel portion 54.

In the first, second, and third embodiments, the door portions 36 and 66 to be formed at the rear panel portions 31 and 71 of the rear pillar garnishes 23 and 63 are arranged by providing the thin hinged portions 37 and 77 at the boundaries from the body portions 32 and 72. However, these thin hinged portions 37 and 77 can be dispensed with if the rear portion 43c of the air bag 43 can easily protrude from the rear panel portions 41 and 71. For example, the door portions 36 and 66 may be arranged by substantially equalizing the thicknesses from the body portions 32 and 72.

In the first, second, and third embodiments, the rear pillar garnishes 23 and 63 include the front panel portions 24, 54 and 64 and the rear panel portions 31 and 71, which are separate from each other. In the area of the front panel portion for the air bag to be inflated and expanded therein, however, a cover portion for preventing the invasion of the air bag may be formed. Moreover, the front panel portion and the rear panel portion may be integrated by jointing them through a thin portion, which can be broken at the expanding time of the air bag. In this modification, the portion on the rear edge side of the thin portion serves as the door portion of the rear panel portion. Moreover, this door portion is opened when the thin portion is broken at the inflating and expanding time of the air bag.

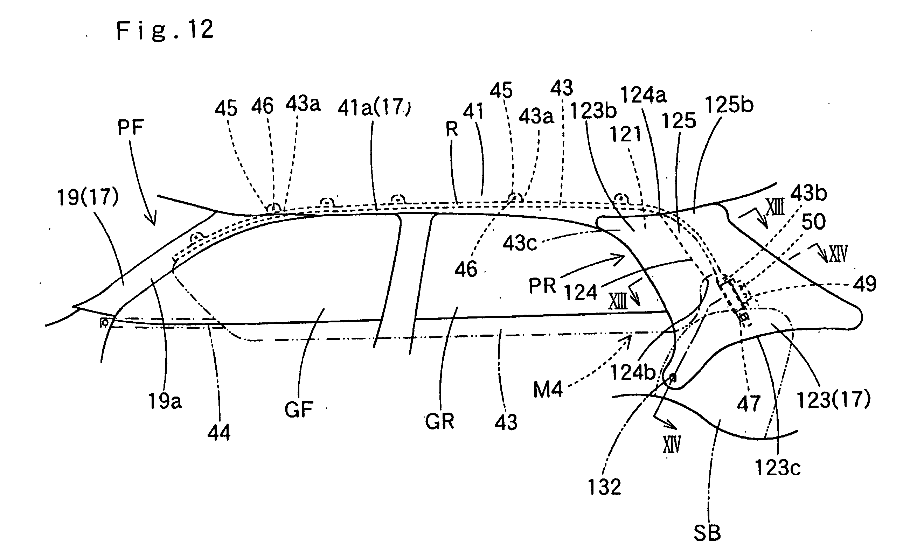

A head protecting air bag system M4 of a first comparative example, as shown in Fig. 12, includes the air bag 43, the inflator 47 and the air bag cover 17. The air bag 43 is housed, as in the first to third embodiments, in a folded shape in the rear pillar portion PR, the roof side rail portion R and the front pillar portion PF on the compartment (interior) side of a vehicle. The inflator 47 supplies the inflating gas to the air bag 43, as in the first to third embodiments. The air bag cover 17 covers the interior side of the folded air bag 43. In the case of the comparative example, the air bag cover 17 includes a rear pillar garnish 123, a lower edge 41a of the roof interior member 41, and the front pillar garnish 19.

The air bag 43 is similar to those of the first to third embodiments, and is provided with the plurality of mounting portions 43a on the upper edge side and the joint cylinder portion 43b. On the individual mounting portions 43a, the mounting brackets 45 of a sheet metal are attached. The joint cylinder portion 43b is mounted around the inflator 47. Moreover, the air bag 43 is mounted on an inner panel 121 by the mounting brackets 45 and the mounting bolts 46. The inner panel 121 forms the body of the rear pillar portion PR. The inner panel 121 extends to the roof side rail portion R and the front pillar portion PF, too, as in the first embodiment

On the front side of the air bag 43 of the first comparative example, a belt 44 is provided. This belt 44 connects the front portion of the air bag 43 and the lower portion of the front pillar portion PF. This belt 44 exhibits such a tension on the lower edge side of the air bag 43 such that the lower edge side of the air bag 43 may not move to the exterior side at the completion of the inflation and expansion.

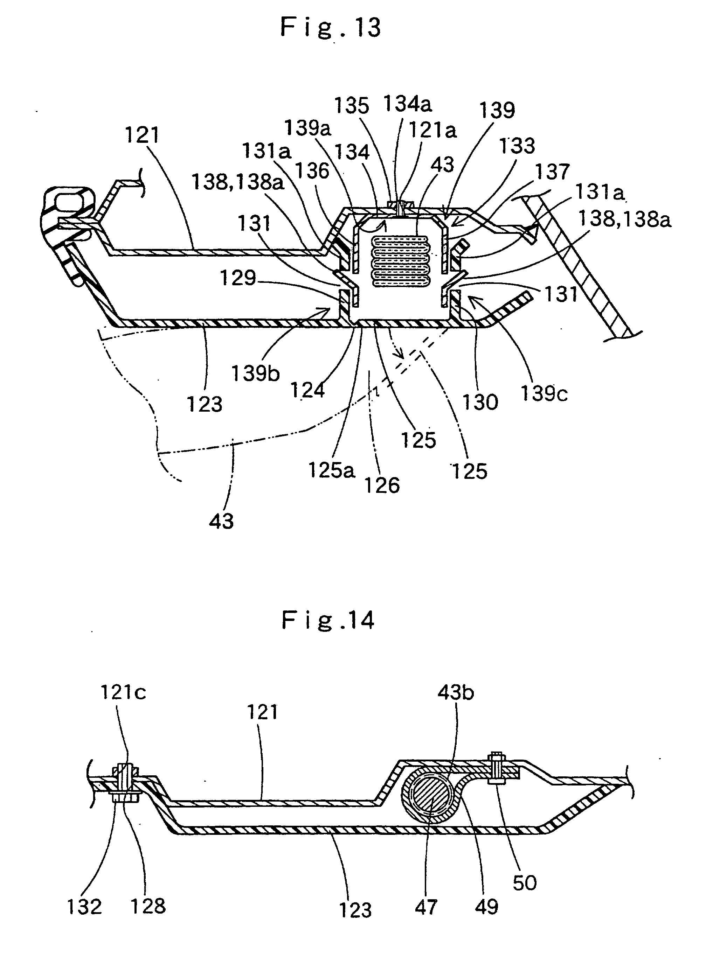

The inflator 47 is of the cylinder type, as in the first to third embodiments. Around the inflator 47, more specifically, the joint cylinder portion 43b of the air bag 43, as shown in Figs. 12 and 14, is mounted. Around the joint cylinder portion 43b, the mounting bracket 49 of a sheet metal is mounted. This mounting bracket 49 is mounted on the inner panel 121 by the two mounting bolts 50. As a result, the inflator 47 is mounted on the inner panel 121 in the vicinity of the vertically intermediate position of the rear pillar portion PR.

This rear pillar portion PR includes, as shown in Figs. 13 and 14, the inner panel 121, the rear pillar garnish 123 and a case 133. The inner panel 121 forms the body of the rear pillar portion PR. The garnish 123 covers the interior side of the inner panel 121.

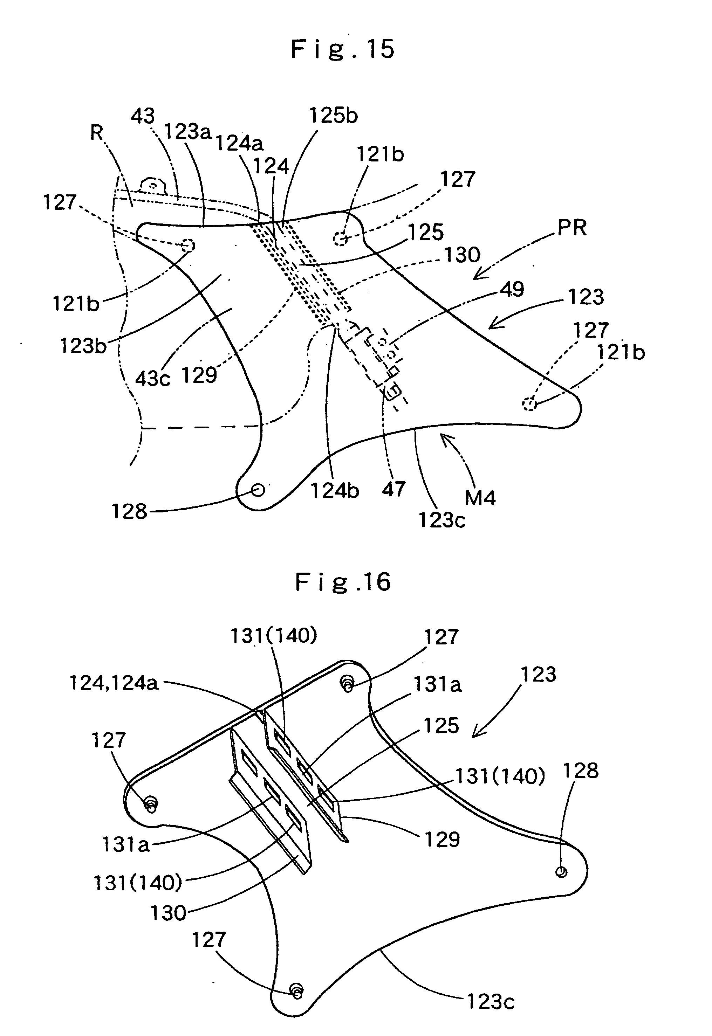

Moreover, the rear pillar garnish 123 is formed by injection-molding a synthetic resin, such as a polyolefin-type thermoplastic elastomer. The garnish 123 is provided, as shown in Figs. 13 to 16, with a portion 124 to be broken. This to-be-broken portion 124 has its upper end 124a generally at the center of an upper edge 123a of the garnish 123. The to-be-broken portion 124 extends along a downward slope from the upper end 124a. This to-be-broken portion 124 will be pushed and broken by the air bag 43 being inflated and expanded. Moreover, the to-be-broken portion 124 forms an opening 126 capable of protruding the air bag 43. The to-be-broken portion 124 is constructed in this comparative example by forming a groove in the back side of the garnish 123. Moreover, the lower end 124b of the to-be-broken portion 124 does not extend as far as the outer peripheral edge of the garnish 123. In other words, the lower end 124b is arranged over the lower edge 123c of the garnish 123. In this comparative example, the lower end 124b is at a vertically intermediate position of the garnish 123. The area on the back side of the broken portion 124 provides a door portion 125. This door portion 125 is opened, when the air bag 43 is inflated and expanded, to form the opening 126. Here, in the case of the first comparative example, the area of the door portion 125 forms a triangle (as shown in Figs. 12 and 15) by joining the three points 124a, 124b and 125b. The point 124a is located at the upper end of the to-be- broken portion 124. The point 124b is located at the lower end of the to-be-broken portion 124. The point 125b is located in the vicinity of the upper end of the rear side wall 130 between later-described front and rear side walls 129 and 130. Moreover, the hinged portion at the opening time of the door portion 125 is defined by joining the position 125b and the lower end 124b of the to-be-broken portion 124.

On the back side of the rear pillar garnish 123, on the other hand, there are arranged the front side wall 129 and the rear side wall 130, which are protruded in a face-to-face relation toward the exterior side. The front side wall 129 protrudes from the front side of the to-be-broken portion 124, and the rear side wall 130 protrudes from the back side of the door portion 125. These front and rear side walls 129 and 130 form wall portions 139b and 139c that form a housing wall 139. This housing wall 139 includes the front and rear side walls 129 and 130 and a later-described bottom wall 134 and front and rear side walls 136 and 137, of the case 133. Moreover, these front and rear side walls 129 and 130 are provided with a plurality of engagement holes 131. Engagement members 138, which engage with the peripheral edges of the engagement holes 131, are inserted into engagement holes 131. The engagement members 138 are formed on the front and rear side walls 136 and 137 of the case 133.

Still moreover, the rear pillar garnish 123 is provided with a mounting hole 128 at its front lower corner. On the remaining three corners of the garnish 123, the retaining legs 127 are formed. The mounting hole 128 and the retaining legs 127 are used when the garnish 123 is mounted on the inner panel 121. A mounting bolt 132 is inserted into the mounting hole 128. This bolt 132 is screwed into a threaded hole 121c, which is formed in the inner panel 121. The individual retaining legs 127 are inserted into retaining holes 121b of the inner panel 121, and retained on the peripheral edges of the retaining holes 121b.

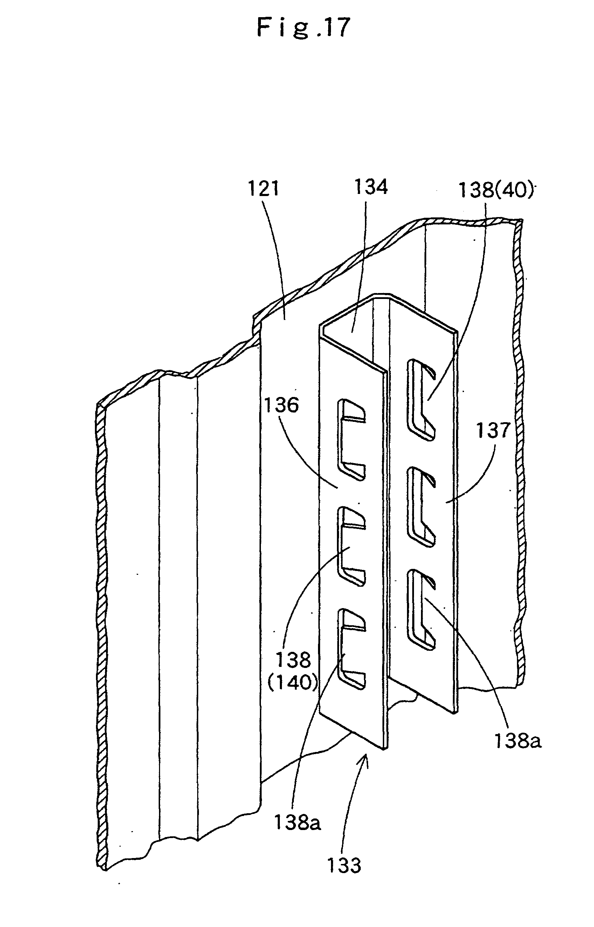

On the side of the inner panel 121, as shown in Figs. 13 and 17, the case 133 of a sheet metal is attached. This case 133 is formed to have a U-shaped section having the bottom wall 134 and the front and rear side walls 136 and 137. On the bottom wall 134, there are fixed bolts 134a, which protrude to the exterior side. These bolts 134a attach the case 133 on the inner panel 121. From the front and rear side walls 136 and 137, the engagement members 138 are cut and raised. These individual engagement members 138 retain the exterior side edges 131a of the peripheral edges of the individual engagement holes 131. These individual engagement holes 131 are formed in the front and rear side walls 129 and 130 of the garnish 123.

Here, the case 133 and the front and rear side walls 129 and 130 of the garnish 123 to extend within a range from the upper end 124a to the lower end 124b of the to-be-broken portion 124 of the garnish 123. In other words, the case 133 and the side walls 129 and 130 do not extend to the position where the inflator 47 is arranged.

On the other hand, the case 133 and the front and rear side walls 129 and 130 of the garnish 123 construct the housing wall 139. This housing wall 139 includes a bottom wall portion 139a, a front side wall portion 139b and the rear side wall portion 139c. The bottom wall portion 139a is formed from the bottom wall 134 of the case 133. The front side wall portion 139b is formed from the front side walls 136 of the case 133 and the front side wall 129 of the garnish 123. The rear side wall portion 139c is formed from the rear side walls 137 of the case 133 and the rear side walls 130 of the garnish 123. These bottom wall portion 139a and front and rear side wall portions 139b and 139c cover the three sides, i.e., the front side, the back side and the vehicle exterior side, around the air bag 43. In other words, the bottom wall portion 139a and the front and rear side wall portions 139b and 139c cover the three sides, other than the door portion 125 around the air bag 43. Moreover, the bottom wall portion 139a of the housing wall 139 is formed from the bottom wall 134 of the case 133 of a sheet metal. As a result, the bottom wall portion 139a has rigidity. On the other hand, the front and rear side wall portions 139b and 139c of the housing wall 139 are provided with front and rear side walls 129 and 130 made of a synthetic resin. However, these front and rear side walls 129 and 130 are thick. As a result, the front and rear side wall portions 139b and 139c have a rigidity.

In this comparative example, the front and rear side walls 129 and 130 are mostly covered with the front and rear side walls 136 and 137 of the case 133 made of a sheet metal. Moreover, the side walls 129 and 130 are so jointed by engagement means 140 (including the engagement holes 131 and the engagement members 138) that they may not be separated from the side walls 136 and 137. As a result, the side walls 129 and 130 have a higher rigidity. In this comparative example, still moreover, the exterior side peripheral edges 131a of the individual engagement holes 131 of the front and rear side walls 129 and 130 are retained by the leading end portions 138a of the individual engagement members 138 in the front and rear side walls 136 and 137. These retentions regulate the front and rear side walls 129, 130 and the front and rear side walls 136, 137 so that they may not separate from each other. As a result, the front and rear side wall portions 139b and 139c of the housing wall 139 have a rigidity against deformation to prevent them from bulging in the longitudinal direction of the vehicle.

The assembly of the head protecting air bag system M4 of the fisrt comparative example with the vehicle will be described. First, the air bag 43 is folded to mount the mounting brackets 45 on the individual mounting portions 43a. On the other hand, the inflator 47 is inserted into the joint cylinder portion 43b to mount the mounting bracket 49. In order to prevent folding collapse, the folded air bag 43 is wrapped at a predetermined portion with a not-shown tape member. As a result, the air bag assembly is prepared.

Next, the individual bolts 134a of the case 133 are inserted into the mounting holes 121a, which are formed in the inner panel 121. Next, the nuts 135 are fastened onto the individual bolts 134a to mount and attach the case 133 on the inner panel 121. Moreover, a portion of the folded air bag 43 is housed in the case 133. On the other hand, the mounting bolts 46 and 50 attach the individual mounting brackets 45 and 49 onto the inner panel 121. On the inner panel 121, the front pillar garnish 19, the roof interior member 41 and the rear pillar garnish 123 are mounted as the air bag cover 17. As a result, the head protecting air bag system M4 can be assembled with the vehicle.

Moreover, the mounting of the rear pillar garnish 123 on the inner panel 121 by fitting the individual engagement members 138 of the case 133 into the individual engagement holes 131 of the front and rear side walls 129 and 130 so that they engage with the peripheral edges of the engagement holes 131. On the other hand, the individual retaining legs 127 of the garnish 123 are retained on the peripheral edges of the retaining holes 121b of the inner panel 121. Moreover, the mounting bolt 132 is inserted into a mounting hole 128, and is screwed into the threaded hole 121c of the inner panel 121. Then, the garnish 123 can be mounted on the inner panel 121.

In this comparative example, a back seat SB (as shown in Fig. 12) is arranged in the vehicle after the rear pillar garnish 123 has been mounted on the inner panel 121. As a result, the mounting bolt 132 is not exposed to the compartment (vehicle interior).

After the head protecting air bag system M4 has been mounted on the vehicle, the inflating gas flows into the air bag 43, if the inflator 47 is activated. Then, the air bag 43 pushes and opens the lower edges 19a and 41a of the front pillar garnish 19 and the roof interior member 41 in the air bag cover 17. At the portion of the rear pillar garnish 123, on the other hand, the door portion 125 is pushed by the air bag 43 to break the to-be-broken portion 124. As indicated by double-dotted lines in Fig. 13, the door portion 125 is pushed and opened by the air bag 43 so that the air bag 43 protrudes from the opening 126 in the door portion 125. As indicated by a double-dotted line in Fig. 12, the air bag 43 covers the front and rear side windshields GF and GR.

When the air bag 43 is inflated and expanded, in the head protecting air bag system M4 of the first comparative example, the to-be-broken portion 124 is arranged downward from the upper edge 123a of the rear pillar garnish 123. On the other hand, the air bag 43 is folded and housed in the rear pillar por tion PR upward and forward to the roof side rail portion R. In the rear pillar portion PR, the air bag 43 protrudes from the opening 126 to the front of the broken portion 124. As a result, the front side upper portion 123b of the to-be-broken portion 124 on the interior side of the rear pillar garnish 123 is covered with the portion 43c of the inflated and expanded air bag 43, as shown in Figs. 12, 13, and 15.

On the other hand, the rear pillar garnish 123 itself is formed integrally with the to-be-broken portion 124 by injection-molding or the like. The to-be-broken portion 124 can be easily formed by forming grooves or the like continuously or interruptedly in the back side of the garnish 123 so that it can be broken when the air bag 43 is inflated and expanded. In other words, the rear pillar garnish 123 can be integrated so that no parting line need be formed, unlike a rear pillar garnish constructed of a plurality of parts. As a result, the garnish 123 can have a satisfactory appearance.

In the head protecting air bag system M4 of the first comparative example, even if the inflator 47 is mounted on the rear pillar portion PR, the upper portion 123b of the rear pillar portion PR can be covered with the rear portion 43c of the air bag 43. Moreover, the garnish 123 provides a satisfactory appearance while the air bag 43 is neither inflated nor expanded.

In the air bag system M4 of this comparative example, the lower end 124b of the broken portion 24 does not reach the outer peripheral edge of the rear pillar garnish 123. As a result, the garnish 123 is not completely divided into plural parts, even if the to-be-broken portion 124 is broken when the air bag 43 is inflated and expanded. This makes it possible to reduce the number of mounting means for mounting the garnish 123 on the inner panel 121.

In the air bag system M4 of this comparative example, the folded air bag 43 is surrounded, excepting the door portion 125, by the rigid housing wall 139. When the air bag 43 is supplied with the inflating gas, the air bag 43 can be guided by the housing wall 139 to apply the pressure to the door portion 125. As a result, the air bag 43 does not enter the back side of the rear pillar garnish 123, excepting the door portion 125. On the other hand, the air bag 43 can break, without fail, the to-be-broken portion 124 to open the door portion 125. Then, the air bag 43 smoothly protrudes from the opening 126.

In this comparative example, the to-be-broken portion 124 is arranged on the side of the front edge 125a of the door portion 125. Therefore, the air bag 43 is inflated and expanded along the interior side face of the front side upper portion 123b of the garnish 123 in front of the broken portion 124. As a result, the air bag 43 can suppress, when inflated and expanded, its protrusion to the interior side.

If this point is not to be considered, the construction may be modified in the following manner. The to-be-broken portion 124 is extended in the two longitudinal directions from its lower end 124b. Specifically, two door portions to open like a double-leafed hinged door may be arranged over the lower end 124b of the to-be-broken portion 124. Alternatively, the to-be-broken portion may be arranged on the rear edge side of the door portion.

In the first comparative example, on the other hand, the housing wall 139 is constructed to include the front and rear side walls 136, 137 and the front and rear side walls 129, 130. The front and rear side walls 136 and 137 are arranged on the side of the inner panel 121, which is the rear pillar portion body. The front and rear side walls 129 and 130 are arranged on the side of the rear pillar garnish 123. On the other hand, the front and rear side walls 129, 130 on the side of the garnish 123 are inseparably coupled to the front and rear side walls 136, 137 on the side of the inner panel 121 by utilizing the engagement means 140. This engagement means 140 is composed of the engagement holes 131 and the engagement members 138. In other words, the engagement means 140 constructs the mounting means for mounting the rear pillar garnish 123 on the inner panel 121, which is the rear pillar portion body. With the provision of the engagement means 140, therefore, it is possible to omit the mounting means for mounting the garnish 123 itself onto the inner panel 121 on the body side, in the vicinity of the door portion 124.

In the first comparative example, the front and rear side walls 139b and 139c of the housing wall 139 for surrounding the predetermined periphery of the air bag 43 are provided with the front and rear side walls 136 and 137 arranged on the side of the inner panel 121, and the front and rear side walls 129 and 130 arranged on the side of the garnish 123. However, the front and rear side walls 139b and 139c of the housing wall 139 may be formed of the front and rear side walls 136, 137, 129 and 130 on only one side. The front and rear side walls 136 and 137 constructing the front and rear side walls 139b and 139c of the housing wall 139 may be provided on the side of the inner panel 121 in the following manner. Specifically, the bottom wall portion 139a of the housing wall 139 is constructed of the inner panel 121 itself. Moreover, the front and rear side walls 136 and 137 may be separated from each other and may be separately disposed on the inner panel 121.

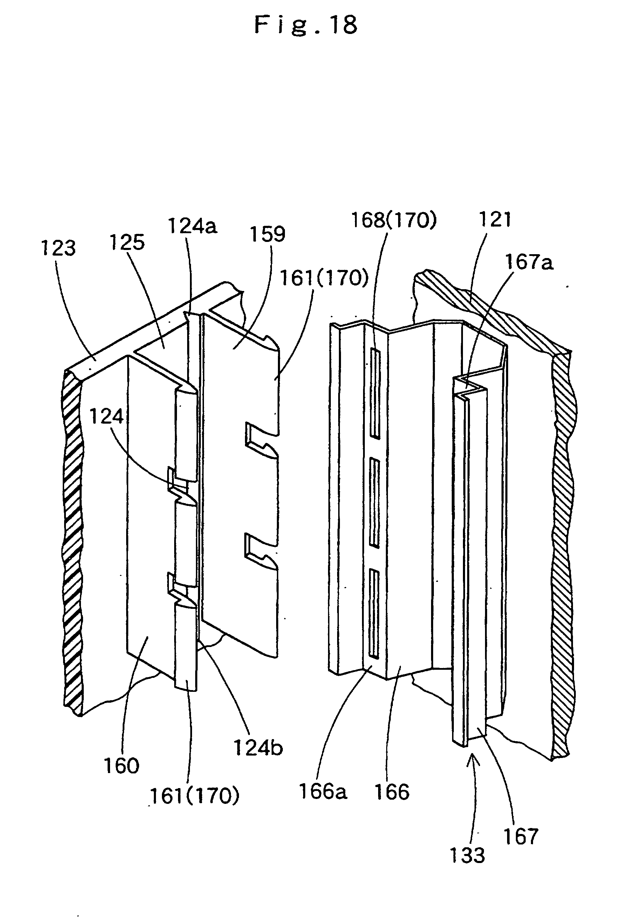

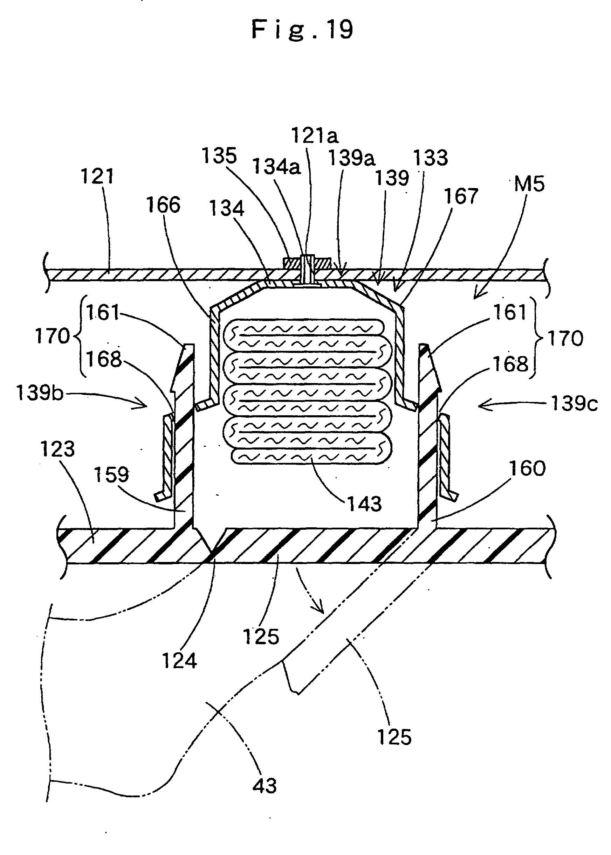

In the first comparative example, on the other hand, the engagement means 140 is provided with the engagement holes 131 formed in the front and rear side walls 129 and 130 on the side of the garnish 123, and the engagement members 138 formed in the front and rear side walls 136 and 137 on the side of the inner panel 121. However, the engagement means may be modified into engagement means 170 of a head protecting air bag system M5 of a second comparative example, as shown in Figs. 18 and 19. This engagement means 170 is provided with a plurality of engagement members 161 and engagement holes 168. The plurality of engagement members 161 are arranged on front and rear side walls 159 and 160, which are the wall portions of the garnish 123. The engagement holes 168 are arranged in front and rear side walls 166 and 167, which are the wall portions on the side of the inner panel 121. The engagement members 161 fit in the engagement holes 168 so that they unextractably engage with the peripheral edges of the engagement holes 168. Here, this case 133 is attached to on the inner panel 121 by inserting the plurality of bolts 134a into the mounting holes 121a of the inner panel 121, and by fastening the nuts 135 on the individual bolts 134a. The individual bolts 134a are attached to the bottom portion 134 of the case 133. Moreover, this case 133 has the engagement holes 168 in stepped portions 166a and 167a. These stepped portions 166a and 167a are extended back and forth in the front and rear side walls 166 and 167. Here, portions similar to those of the first comparative example are designated by the same reference numerals as those of the first comparative example.

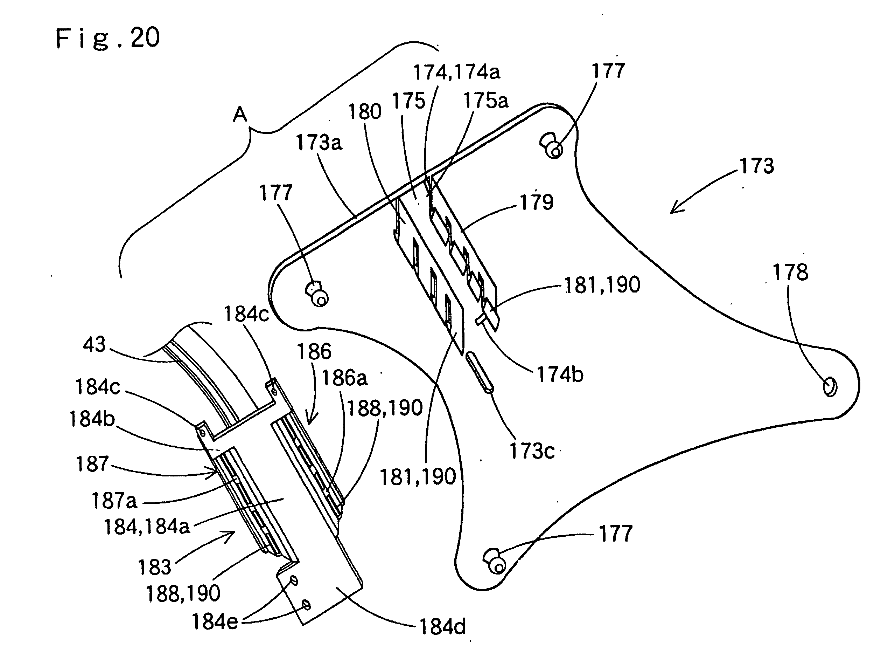

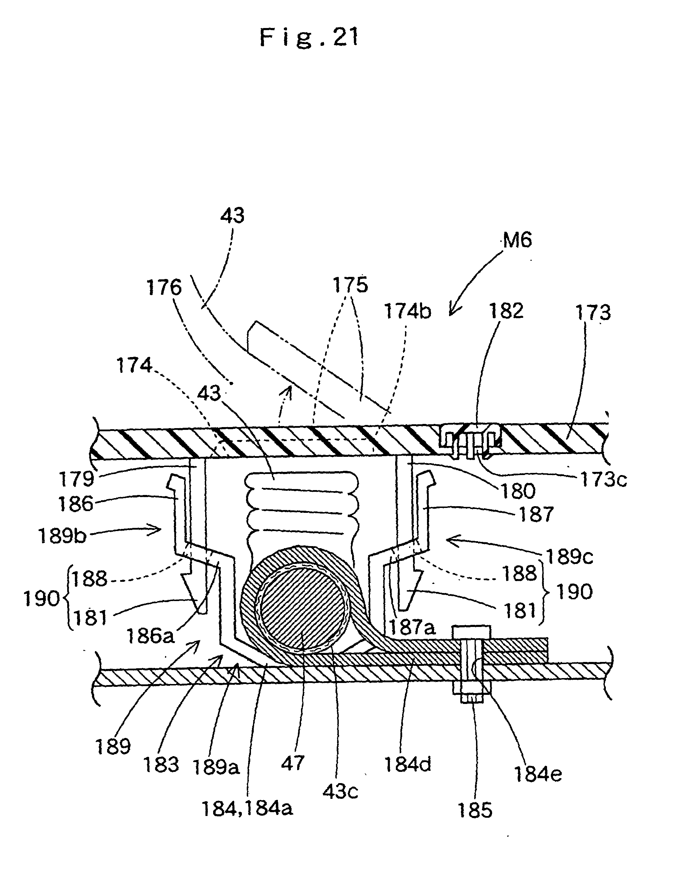

When the front and rear side walls 136, 137, 166 and 167 and the front and rear side walls 129, 130, 159 and 160 for constructing the housing wall 139 are to be coupled, moreover, the construction may be modified into one of a head protecting air bag system M6 of a third comparative example, as shown in Figs. 20 and 21.

In this third comparative example, case 183 to be attached to the side of the inner panel 121 is provided with a bottom wall 184 and front and rear side walls 186 and 187. These front and rear side walls 186 and 187 protrude to the vehicle interior side from the edges, as taken in the longitudinal direction of the vehicle, of the bottom wall 184. On the bottom wall 184, a mounting member portion 184b at the upper edge of the vehicle is formed. This mounting member portion 184b is provided with mounting holes 184c and 184c for mounting it onto the inner panel 121. The mounting member portion 184b is protruded upward from a rear pillar garnish 173. Moreover, the mounting member portion 184b is mounted on the inner panel 121 on the back side of the roof interior member 41 by bolts. In the bottom wall 184, on the other hand, a mounting bracket portion 184d, which is located on the lower side of the vehicle, is formed. This mounting bracket portion 184d is formed by folding it into a generally cylindrical shape. The mounting bracket portion 184d is similar to the mounting bracket 49 of the first comparative example. Specifically, the mounting bracket portion 184d attaches the inflator 47 on the inner panel 121, while clamping the air bag joint cylinder portion 43b mounted around the inflator 47. This mounting bracket portion 184d is provided with mounting holes 184e for receiving mounting bolts 185.

Moreover, the bottom wall 184 of the case 183 is provided with a body portion 184a between the mounting member portion 184b and the mounting bracket portion 184d. The body portion 184a constructs a bottom wall portion 189a of a housing wall 189. This housing wall 189 covers the garnish 173 around the folded air bag 43, except a door portion 175.

On the other hand, the front and rear side walls 186 and 187 protrude from the two sides of the body portion 184a. The front and rear side walls 186 and 187 are provided with stepped portions 186a and 187a having a plurality of engagement holes 188. The engagement members 181, which individually engage with the peripheral edges of the engagement holes 188, are inserted into the individual engagement holes 188. The engagement members 181 are provided at front and rear side walls 179 and 180, which are arranged near the front and rear edges of the door portion 175 of the rear pillar garnish 173.

In this rear pillar garnish 173 and on the side of a front edge 175a of the door portion 175, a portion 174 having a groove to be broken is arranged. This to-be-broken portion 174 has an upper end 174a arranged generally at the center of an upper edge 173a of the garnish 173. The to-be-broken portion 174 is bent at its lower end 174b backward of the vehicle. Specifically, the to-be-broken portion 174 is arranged in the shape of a letter "L", as viewed from the vehicle interior side of the garnish 173. The door portion 175 of the garnish 173 in the third comparative example is arranged in a rectangular shape between the later-described front and rear side walls 179 and 180. The hinged portion of the door portion 175 when opened extends upward generally along the rear side wall 180 from the leading end of the lower end 174b of the broken portion 174.

At the four corners of the garnish 173, there are arranged retaining legs 177 and a mounting hole 178, as in the first and second comparative example. These retaining legs 177 and mounting hole 178 are employed to mount the garnish 173 onto the inner panel 121. From the vicinities of the front and rear edges of the area of the door portion 175, on the other hand, there are protruded the front and rear side walls 179 and 180. These front and rear side walls 179 and 180 engage with the front and rear side walls 186 and 187 of the case 183. On the individual front and rear side walls 179 and 180, there are formed the engagement members 181 to engage with the peripheral edges of the individual engagement holes 188 of the front and rear side walls 186 and 187.

Moreover, this rear pillar garnish 173 is provided with work holes 173c. The bolts 185 for fastening the mounting bracket portion 184d of the case 183 are inserted into the work holes 173c. Caps 182 are fit into those work holes 173c.

The assembly of the head protecting air bag system M6 of the third comparative example with the vehicle will be described. First, the air bag 43 is folded to mount the mounting brackets 45 onto the individual mounting portions 43a. On the other hand, the joint cylinder portion 43b is mounted around the inflator 47, and is inserted into the mounting bracket portion 184d of the case 183. Next, the mounting bracket portion 184d is fastened to reduce its diameter. In order to prevent a folding collapse, the folded air bag 43 is wrapped at a predetermined portion with the not-shown tape member. Next, the engagement members 181 of the rear pillar garnish 173 are brought into engagement with the peripheral edges of the individual engagement holes 188 of the case 183, to couple the rear pillar garnish 173 to the case 183. As a result, the air bag assembly A is prepared.

Next, the mounting bolts 46 attach the individual mounting brackets 45 onto the inner panel 121. The mounting bolts 185 are inserted into the work holes 173c of the garnish 173. By utilizing these bolts 185, the mounting bracket portion 184d of the case 183 is attached to the inner panel 121. The mounting member portion 184b of the case 183 is mounted on the inner panel 121 by bolts. The individual retaining legs 177 of the garnish 173 are retained on the peripheral edges of the retaining holes 121b of the inner panel 121. The mounting bolt 132 is inserted into the mounting hole 178, and is screwed into the threaded hole 121c of the inner panel 121 to mount and attach the air bag assembly A onto the inner panel 121. Next, the caps 182 are fit in the work holes 173c of the rear pillar garnish 173. On the other hand, the front pillar garnish 19 and the roof interior member 41 are mounted on the inner panel 121 as the air bag cover 17. Then, the head protecting air bag system M6 can be assembled with the vehicle.

After the head protecting air bag system M6 has been mounted on the vehicle, the inflating gas flows into the air bag 43 if the inflator 47 is activated. Then, the air bag 43 pushes and opens the lower edges 19a and 41a of the front pillar garnish 19 and the roof interior member 41 in the air bag cover 17. At the portion of the rear pillar garnish 173, on the other hand, the door portion 175 is pushed by the air bag 43 to break the to-be-broken portion 174. As a result, the air bag 43 pushes and opens the door portion 175 until it (the air bag 43) protrudes from an opening 176 made in the door portion 175.

In this air bag system M6 of the third comparative example it is possible to achieve functions and effects similar to those first and second comparative example. In the air bag system M6, it is possible to form the air bag assembly A including the air bag 43, the inflator 47, the rear pillar garnish 173, and the case 183, in advance. If this air bag assembly A itself is assembled with the vehicle, it is not necessary to mount the case 183 and the rear pillar garnish 173 sequentially on the inner panel 121. In short, the assembling work for mounting the head protecting air bag system M6 with the vehicle is simplified. On the other hand, the air bag 43, the inflator 47, the rear pillar garnish 173 and the case 183 can be handled as a unit, which is the air bag assembly A, until they are mounted on the inner panel 121. This makes it convenient to manage and transport the parts of the air bag system M6.

In the third comparative example, the retaining members 181 of the wall portion (i.e., the front and rear side walls 179 and 180) on the side of the rear pillar garnish 173 are coupled by the engagement holes 188 to the wall portion (i.e., the front and rear side walls 186 and 187 of the case 183) on the side of the rear pillar portion body. However, this engagement means for coupling the front and rear side walls 186, 187 and the front and rear side walls 179, 180 should not be limited to that of the comparative example. Specifically, the engagement means may employ bolts/nuts or rivets as long as it can couple the front and rear side walls 186, 187 and the front and rear side walls 179, 180. Alternatively, the engagement means may be constructed by inserting pins into engagement holes in a locking bar shape.

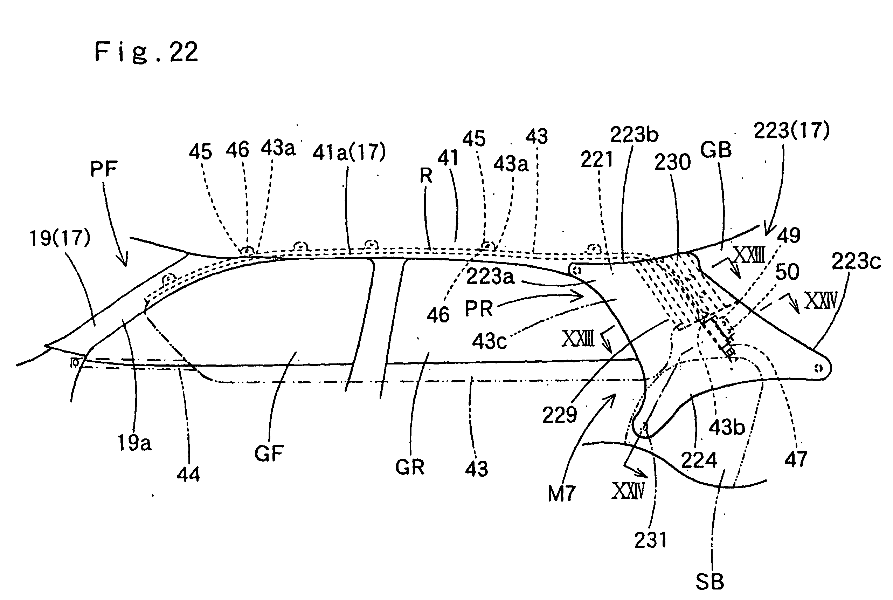

A head protecting air bag system M7 of a fourth comparative example, as shown in Fig. 22, is provided, as in the embodiment and the first comparative example, with the air bag 43, the inflator 47 and the air bag cover 17. The air bag 43 is housed in a folded shape in the rear pillar portion PR, the roof side rail portion R and the front pillar portion PF on the compartment side of a vehicle. The inflator 47 supplies an inflating gas to the air bag 43. The air bag cover 17 covers the interior side of the folded air bag 43. In this comparative example, the air bag cover 17 is provided with a rear pillar garnish 223, a lower edge 41a of the roof interior member 41, and a front pillar gar nish 19.

The air bag 43 is provided, as in the embodiment and the first comparative example, with a plurality of mounting portions 43a on the upper edge side and the joint cylinder portion 43b. On the individual mounting portions 43a, the mounting brackets 45 of a sheet metal are attached. The joint cylinder portion 43b is mounted around the inflator 47. Moreover, the air bag 43 is mounted on an inner panel 221 by the mounting brackets 45 and the mounting bolts 46. The inner panel 221 constructs the body of the rear pillar portion PR, and is extended to the roof side rail portion R and the front pillar portion PF, as well. Here, this air bag 43 is also provided with a belt 44, as in the first comparative example.

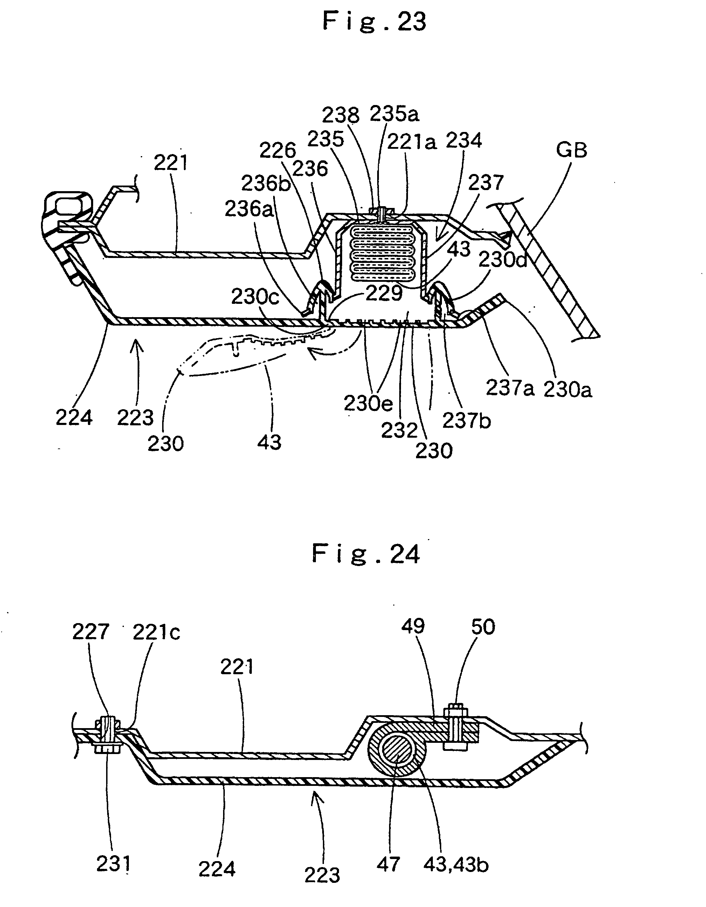

The inflator 47 is made into the cylinder type, as in the embodiment and the first comparative example. Around the inflator 47, as shown in Figs. 22 and 24, the joint cylinder portion 43b of the air bag 43, around which there is further mounted the mounting bracket 49 of a sheet metal, is mounted. This mounting bracket 49 is mounted on the inner panel 221 by the two mounting bolts 50. The inflator 47 is mounted on the inner panel 221 in the vicinity of the vertically intermediate position of the rear pillar portion PR by the bracket 49 and the bolts 50.

The rear pillar portion PR is provided, as shown in Figs. 23 and 24, with the inner panel 221 as the rear pillar portion body, a case 234 of a sheet metal and the rear pillar garnish 223. The rear pillar garnish 223 covers the interior side of the inner panel 221 and the case 234.

The rear pillar garnish 223 is made of a synthetic resin such as a polyolefin-type thermoplastic elastomer and the like. This garnish 223 is provided with a door portion 230 and a body portion 224, as shown in Figs. 23 to 25 and 28. The door portion 230 is formed into a generally rhombic shape, and is arranged on the upper rear edge side of the garnish 223. The door portion 230 is opened when the air bag 43 is inflated and expanded. The body portion 224 indicates the portions other than the door portion 230. The body portion 224 is provided with a mounting hole 227 at the front lower corner of the vehicle. At the remaining two corners of the body portion 224, retaining legs 225 are protruded from the back side. These mounting hole 227 and retaining legs 225 are employed for mounting the garnish 223 on the inner panel 221. A mounting bolt 231 is inserted into the mounting hole 227. This bolt 231 is screwed into a threaded hole 221c, which is provided in the inner panel 221. The individual retaining legs 225 are retained in retaining holes 221b, which are formed in the inner panel 221.

On the side of a lower edge 230b of the door portion 230 in the body portion 224, a thin portion 228 to be broken is formed. This to-be-broken portion 228 is broken when the door portion 230 is opened. The to-be-broken portion 228 is formed by forming a groove in the back side of the pillar garnish 223. On the side of a front edge 230c of the door portion 230, there is linearly formed a hinged portion 229 for the door portion 230. This hinged portion 229 is formed by forming a groove in the back side of the pillar garnish 223. Here, the groove in the hinged portion 229 is made shallower than that of the broken portion 228 so that it may not be broken.

On the back side of the body portion 224 in front of the hinged portion 229, a plurality of retaining legs 226 are formed. The individual retaining legs 226 are inserted into individual retaining holes 236b formed in the case 234, and are retained on the peripheral edges of the retaining holes 236b.

The door portion 230 is formed into a generally rhombic shape and is arranged from the vicinity of the center of an upper edge 223b to the rear edge 223c of the rear pillar garnish 223. The door portion 230 is molded integrally with the body portion 224. When this door portion 230 is opened, it is pushed at first by the air bag 43 being inflated and expanded so that the to-be-broken portion 228 on the side of the lower edge 230b is broken. The door portion 230 is opened on the hinged portion 229 on the side of the front edge 230c as to move a rear edge 230a forward. The door portion 230 is provided on its back side with a plurality of grooves that extend in the arranging direction of the hinged portion 229. On the back side on the side of the rear edge 230a of the door portion 230, a plurality of retaining legs 230d are formed. These individual retaining legs 230d are inserted into individual retaining holes 237b formed in the case 234, and are retained on the peripheral edges of the retaining holes 237b. In this comparative example, those retaining legs 230d have a sectional shape so that they can be broken when they receive a tensive force from the air bag 43 being inflated and expanded. Here, these retaining legs 230d need not be given breakable structure. In other words, the retaining legs 230d may be retained in the retaining holes 237b such that they can be extracted from the retaining holes 237b by the tension of the air bag 43 being inflated and expanded.

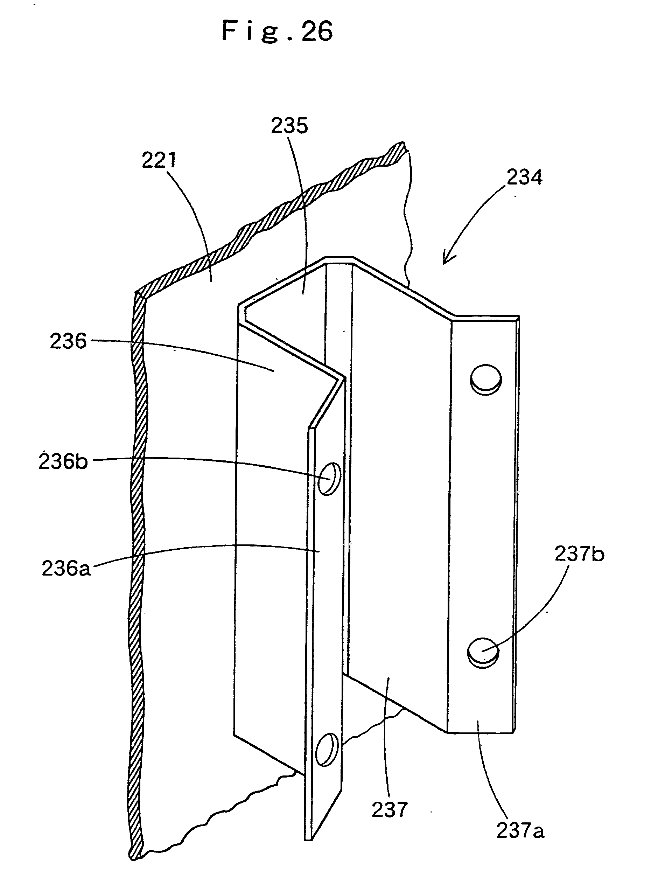

The case 234 is formed, as shown in Figs. 23 and 26, of a sheet metal into a shape having an inverted U-shaped section including a rectangular bottom wall 235 and two side walls 236 and 237. These side walls 236 and 237 protrude to the vehicle interior side from the front and back edges of the bottom wall 235. The case 234 covers the portion around the folded air bag 43, except the door portion 230. The case 234 regulates the protruding direction of the air bag 43 toward the door portion 230 when the air bag 43 is inflated and expanded. On the bottom wall 235, a plurality of bolts 235a are attached to protrude to the exterior side of the vehicle. The bolts 235a attach the case 234 on the inner panel 221. The individual side walls 236 and 237 are provided with flanged portions 236a and 237a which are individually bent and extended outward of the longitudinal direction. The individual flanged portions 236a and 237a are provided with the retaining holes 236b and 237b. Into these individual retaining holes 236b and 237b, the retaining legs 226 of the body portion 224 and the retaining legs 230d of the door portion 230 of the garnish 223 are inserted so that the individual retaining legs 226 and 230d retain the peripheral edges of the retaining holes 236b and 237b.

Here, the case 234 is arranged at a position where it is covered with the door portion 230 of the garnish 223. The case 234 does not extend to the portion of the inflator 47 which is mounted on the inner panel 221.

The assembly of the head protecting air bag system M7 of the fourth comparative example with the vehicle will be described. First, the air bag 43 is folded to mount the mounting brackets 45 on the individual mounting portions 43a. The inflator 47 is inserted into the joint cylinder portion 43b to mount the mounting bracket 49. In order to prevent a folding collapse, the folded air bag 43 is wrapped at a predetermined portion with a not-shown tape member. As a result, there is prepared the air bag assembly.

Next, the individual bolts 235a of the case 234 are inserted into mounting holes 221a, which are formed in the inner panel 221, and nuts 238 are fastened on the individual bolts 235a. As a result, the case 234 is attached to the inner panel 221. A portion of the folded air bag 43 is housed in the case 234. The mounting bolts 46 and 50 attach the individual mounting brackets 45 and 49 on the inner panel 221. On the inner panel 221, the front pillar garnish 19, the roof interior member 41, and the rear pillar garnish 223 are mounted as the < Comparative, example> air bag cover 17. The head protecting air bag system M7 can be assembled with the vehicle.

Moreover, the mounting of the rear pillar garnish 223 on the inner panel 221 is started by retaining the retaining legs 226 and 230d on the peripheral edges of the individual retaining holes 236b and 237b of the case 234. On the other hand, the individual retaining legs 225 are retained on the peripheral edges of the retaining holes 221b of the inner panel 221. Moreover, the mounting bolt 231 is inserted into the mounting hole 227, and is screwed into the threaded hole 221c of the inner panel 221. Then, the garnish 223 can be mounted on the inner panel 221.

In this comparative example, the back seat SB (as shown in Fig. 22) is arranged in the vehicle after the rear pillar garnish 223 has been mounted on the inner panel 221. As a result, the mounting bolt 231 is not exposed to the compartment (vehicle interior).

After the head protecting air bag system M7 has been mounted on the vehicle, the inflating gas flows into the air bag 43 if the inflator 47 is activated. Then, the air bag 43 pushes and opens the lower edges 19a and 41a of the front pillar garnish 19 and the roof interior member 41 in the air bag cover 17. At the portion of the rear pillar garnish 223, the door portion 230 is pushed by the air bag 43 to break the individual retaining legs 230d and 230d. Then, the to-be-broken portion 228 is broken, and the door portion 230 is opened, with its rotation centering on the hinged portion 229 so as to move the rear edge 230a forward, as shown in Figs. 4, 8 and 9. As a result, the air bag 43 protrudes from an opening 232 formed in the door portion 230. As indicated by a double-dotted line in Fig. 22, the air bag 43 covers the front and rear side windshields GF and GR.

In this head protecting air bag system M7, the folded air bag 43 is covered with the door portion 230 on the upper rear edge side of the garnish 223, and extends upward and forward of the door portion 230 to the roof side rail portion R. The air bag 43 extends, when inflated and expanded, in the rear pillar portion PR forward of the hinged portion 229 in the rear pillar garnish 223. As a result, an upper portion 223a of the rear pillar garnish 223 in front of the hinged portion 229 on the interior side is covered with the portion 43c of the air bag 43 inflated and expanded.

In the fourth comparative example, even if the inflator 47 is mounted on the rear pillar portion PR, the air bag 43 can be smoothly inflated and expanded to cover the upper portion 223a of the rear pillar portion PR.

In the fourth comparative example, the rear pillar garnish 223 for covering the exterior side of the rear pillar portion PR is integrally molded with the door portion 230 and the body portion 224. The garnish 223 is not constructed by mounting the door portion separately so that the parting line of the door portion 230 does not appear on the compartment (vehicle interior) side. As a result, the rear pillar portion PR is covered with the rear pillar garnish 223 that is formed by integrating the body portion 224 and the door portion 230 so that the garnish 223 can improve the appearance of the rear pillar portion PR.

When the air bag 43 is inflated and expanded, the door portion 230 of the rear pillar garnish 223 is pushed by the air bag 43 so that it is opened while moving the rear edge 230a forward. As a result, the door portion 230 does not interfere with the rear windshield GB.

In the fourth comparative example, the door portion 230 of the pillar garnish 223 is provided in its back side with a plurality of grooves 230e along the hinged portion 229. As a result, the door portion 230 smoothly opens from the rear edge 230c in a direction perpendicular to the hinged portion 229.

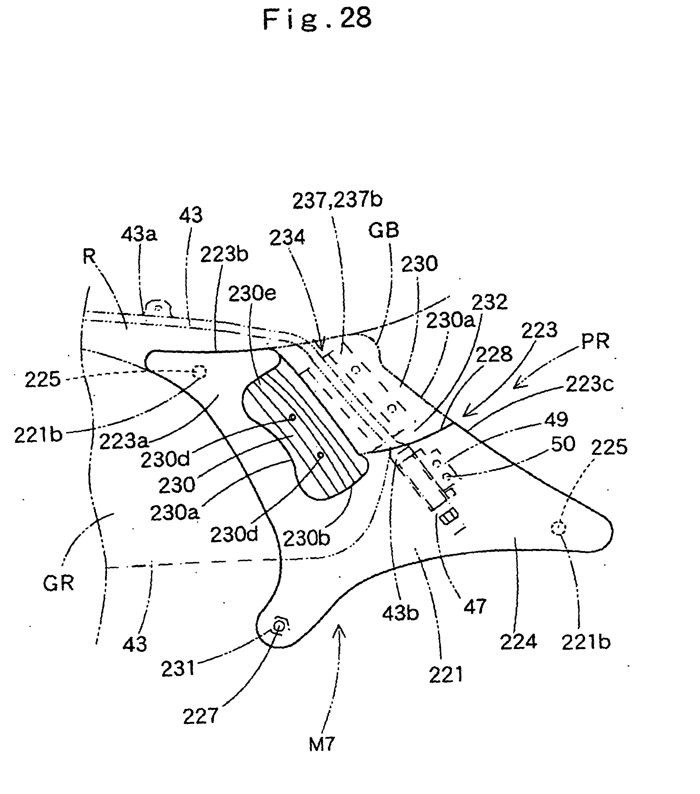

In fourth comparative example, the hinged portion 229 of the door portion 230 is arranged obliquely backward and downward from a slightly back side of the center on the side of the upper edge 223b of the garnish 223, as shown in Fig. 28. The door portion 230 is arranged, when pushed and opened by the air bag 43,to be within the projection range of the rear pillar portion PR, as projected in the horizontal direction and viewed from the interior side. When the air bag 43 is inflated and expanded, the door portion 230 does not interfere, even when opened, with the side windshield GR.

In the fourth comparative example, the retaining legs 230d prevent the door portion 230 from opening any time other than when the air bag 43 is inflated and expanded. The retaining legs 230d are retained on the peripheral edges of the retaining holes 237b of the case 234. Alternatively, the door portion 230 may be retained by the retaining legs 230d directly on the inner panel 221, or may be operably attached by engagement means such as retaining legs extending from the case 234 or the inner panel 221.

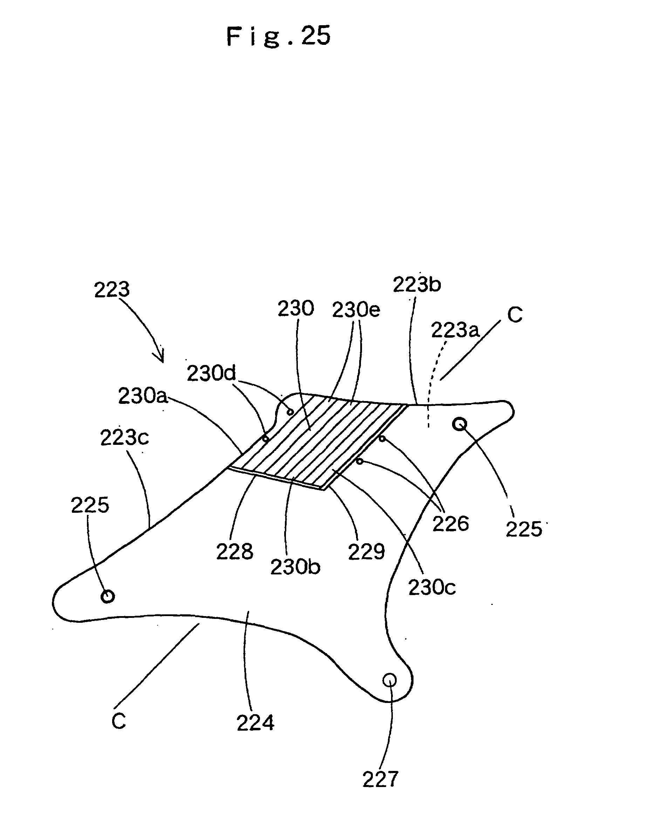

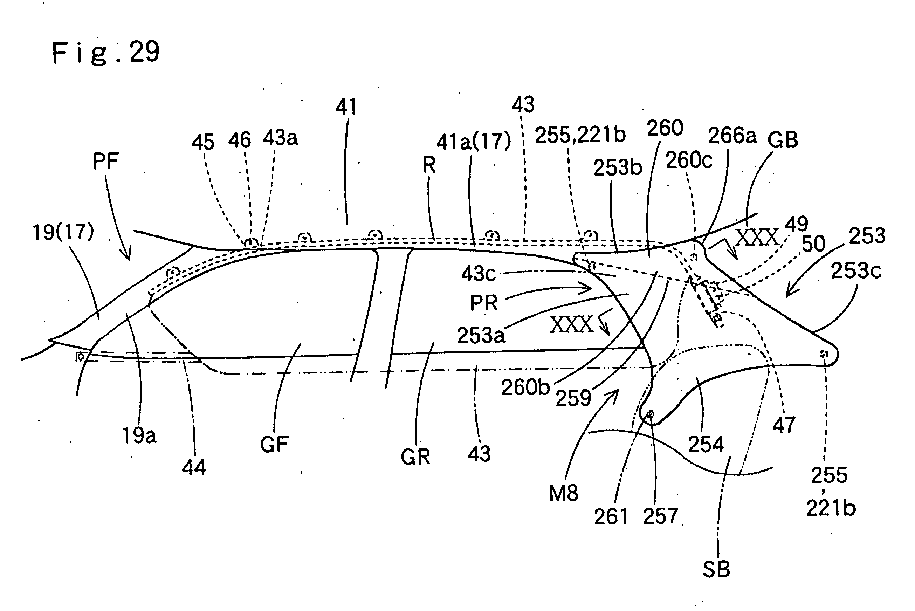

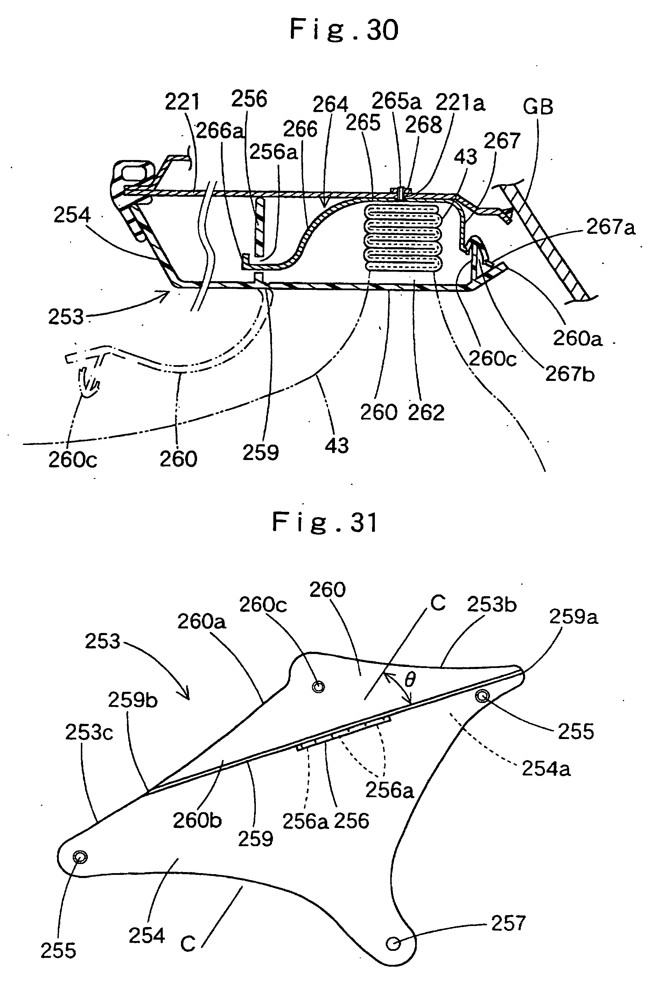

In the fourth comparative example, the hinged portion 229 of the door portion 230 is arranged along a center line CC (as shown in Fig. 25) extending generally vertically of the garnish 223. However, the construction may be modified into one of a head protecting air bag system M8 of an fifth comparative example, as shown in Figs. 29 to 32. Specifically, a hinged portion 259 is arranged a lower end portion 259b at the rear edge 253c of a pillar garnish 253 and an upper end portion 259a over and in front of the lower end portion 259b. Moreover, the hinged portion 259 is inclined at an angle α of 45 degrees or less with respect to the center line CC (as shown in Fig. 31) of the garnish 253 extending generally vertically.

In this fifth comparative example, the rear pillar garnish 253 is made of a synthetic resin, such as a polyolefin-type thermoplastic elastomer or the like. This garnish 253 is provided with a door portion 260 and a body portion 254 other than the door portion 260, as shown in Figs. 29 to 32. The door portion 260 is arranged generally in a triangular shape on the upper rear edge side of the garnish 253. The body portion 254 is provided at its three corners with one mounting hole 257 and two retaining legs 255. Into the mounting hole 257, a mounting bolt 261 is inserted. This bolt 261 is screwed into the threaded hole 221c of the inner panel 221. The individual retaining legs 255 are inserted into the retaining holes 221b of the inner panel 221 to retain the peripheral edges of the retaining holes 221b. On the side of the lower edge 260b of the door portion 260 in the body portion 254, the hinged portion 259 of the door portion 260 is linearly formed. The hinged portion 259 is formed by forming a groove in the back side of the garnish 253. From the back side of the body portion 254 near the hinged portion 259, a retaining wall 256, which extends to the vehicle exterior side, protrudes. This retaining wall 256 is provided with a plurality of retaining holes 256a. Into these individual retaining holes 256a, a plurality of retaining members 266a which are formed in a case 264, are inserted so that the individual retaining members 266a, are retained on the peripheral edges of retaining holes 256a.

The door portion 260 is formed into a generally triangular shape, and is arranged from above the front edge to the rear edge 253c of the garnish 253. The door portion 260 is molded integrally with the body portion 254. In the vicinity of a rear edge 260a at the upper portion of the door portion 260, a retaining leg 260c is formed. This retaining leg 260c is inserted into a retaining hole 267b formed in the case 264, and is retained on the peripheral edge of the retaining hole 267b. In this comparative example, the retaining leg 260c is retained on the peripheral edge of the retaining hole 267b by such a force that it (the retaining leg 260c) can be extracted from the retaining hole 267b when a tension by the air bag 43 being inflated and expanded acts.

On the other hand, the door portion 260 is arranged, when pushed and opened by the air bag 43, to be within the projection range of the rear pillar portion PR, as projected in a horizontal direction as viewed from the interior side. Moreover, the arranged position of the hinged portion 259 is set such that the door portion will open.

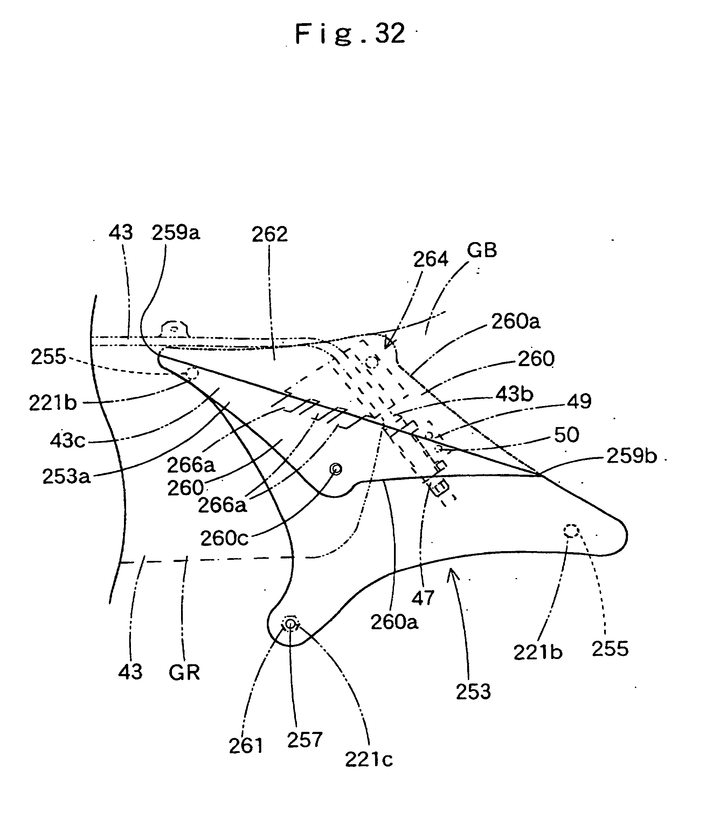

The case 264 is formed, as shown in Figs. 30 and 32, of a sheet metal into a shape having an inverted U-shaped section including a bottom wall 265 and two side walls 266 and 267. The bottom wall 265 is formed into a rectangular shape, and the side walls 266 and 267 are protruded to vehicle the interior side from the right and left edges of the bottom wall 265. The case 264 covers the portion around the folded air bag 43, excepting the door portion 260, as in the fourth comparative example. In other words, the case 264 regulates the protruding direction of the air bag 43 toward the door portion 260 when the air bag 43 is inflated and expanded. On the bottom wall 265, a plurality of bolts 265a are attached to protrude to the exterior side of the vehicle. The bolts 265a attach the case 264 on the inner panel 221. The individual side walls 266 are provided at their leading ends with a plurality of retaining members 266a which are individually bent downward. The individual retaining members 266a, are inserted into the retaining holes 256a of the retaining wall 256 of the garnish 253, and retained on the peripheral edges of the individual retaining holes 256a. At the leading end of the side wall 267, a flanged portion 267a, which is bent and extended upward, is formed. The flanged portion 267a is provided with retaining holes 267b. Into these retaining holes 267b, the retaining legs 260c of the door portion 260 to retain the peripheral edges of the retaining holes 267b are inserted.

Here, the case 264 is also arranged at a position where it is covered with the door portion 260 of the garnish 253. Moreover, the case 264 does not extend to the portion of the inflator 47 which is mounted on the inner panel 221.

The assembly of the head protecting air bag system M8 of the fifth comparative example with the vehicle will be described. First, the air bag 43 is folded as in the fourth comparative example, and is assembled with the mounting brackets 45 and 50 and the inflator 47 to prepare the air bag assembly.

Next, the individual bolts 265a of the case 264 are inserted into mounting holes 221a in the inner panel 221. Moreover, individual nuts 268 are fastened on the individual bolts 265a to attach the case 264 on the inner panel 221. Next, a portion of the folded air bag 43 is housed in the case 264. On the other hand, the mounting bolts 46 and 50 attach the individual mounting brackets 45 and 49 on the inner panel 221. On the inner panel 221, the front pillar garnish 19, the roof interior member 41, and the rear pillar garnish 123 are mounted as the air bag cover 17. Then, the head protecting air bag system M8 can be assembled with the vehicle.

The mounting of the rear pillar garnish 253 on the inner panel 221 is started by retaining the retaining members 266 of the case 264 on the peripheral edges of the individual retaining holes 256a of the retaining wall 256 to retain the retaining legs 260c on the peripheral edges of the retaining holes 267b of the case 264. The individual retaining legs 255 are retained on the peripheral edges of the retaining holes 221b of the inner panel 221. The mounting bolt 261 is inserted into the mounting hole 257 and is screwed into the threaded hole 221c of the inner panel 221. Then, the garnish 253 can be mounted on the inner panel 221.

After the head protecting air bag system M8 has been mounted on the vehicle, the inflating gas flows into the air bag 43 if the inflator 47 is activated. The air bag 43 pushes and opens the lower edges 19a and 41a of the front pillar garnish 19 and the roof interior member 41 in the air bag cover 17. At the portion of the rear pillar garnish 253, the door portion 260 is pushed by the air bag 43 to extract the retaining legs 260c from the retaining holes 267b. As shown in Figs. 30 and 32, the door portion 260 is opened, centered on the hinged portion 259 to move the rear edge 260a forward. Moreover, the air bag 43 protrudes from an opening 262 formed in the door portion 260. As a result, the air bag 43 covers the front and rear side windshields GF and GR, as indicated by a double-dotted line in Fig. 29.

At the rear pillar portion PR, the front upper side portion 253a within the vehicle interior of the rear garnish 253 is covered with a portion 43c of the inflated and expanded air bag 43.

In this air bag system M8 of the fifth comparative example, the garnish 253 is integrally molded with the door portion 260 and the body portion 254. The garnish 253 is not constructed by mounting the door portion separately. As a result, the parting line of the door portion 260 does not appear on the compartment (interior) side so that the garnish 223 can improve the appearance of the rear pillar portion PR.

The door portion 260 is pushed by the air bag 43 so that it is opened to move the rear edge 260a forward. As a result, the door portion 260 does not interfere with the rear windshield GB.

In the fifth comparative example, the hinged portion 259 is arranged so that the open door portion 260 is within the projection range of the rear pillar portion PR, as shown in Fig. 32, and viewed in the horizontal projection state from the vehicle interior side. As a result, the door portion 260 does not interfere with the side windshield GR, even if it is opened by the air bag 43.

In fifth comparative example, the hinged portion 259, on which the door portion 260 is opened, is largely inclined. The hinged portion 259 is arranged to have its upper end portion 259a over and in front of the lower end portion 259b. As a result, the hinged portion 259 can be made longer than in the case where the hinged portion is vertically arranged. In the rear pillar garnish 253 extends generally vertically, more specifically, the area of the door portion 260 is enlarged. With the larger area of the door portion 260, it is possible to enlarge the area of the opening 262 of the open door portion 260. As a result, the air bag 43 smoothly protrudes into the compartment when it is inflated and expanded.

## Claims

1. A head protecting air bag system, comprising
a rear pillar garnish (23) including a door portion (36; 76);
an air bag(43) being housed in a folded shape from a rear pillar portion (PR) on the vehicle interior side to a roof side rail portion (R), and including a portion to be inflated and expanded so as to cover the upper portion on the interior side of said rear pillar garnish (23), and
an inflator (47) for supplying an inflating gas to said air bag (43) and being mounted on the body of a rear pillar portion (PR) on the interior side of a vehicle, **characterized in that**
said rear pillar garnish (23) includes a front panel portion (24; 54; 64) and a rear panel portion (31; 71) individually mounted on said rear pillar portion body for constructing a front edge side and a rear edge side, respectively; **in that**
said front panel portion (24; 54; 64) includes a cover portion (26; 56; 66) disposed on the rear edge side and in an area for said air bag (43) to be inflated and expanded, for preventing said air bag (43) from invading into the space between said rear pillar portion body and said front panel portion (24; 54; 64); and **in that**
said rear panel portion (31; 71) includes the door portion (36; 76) disposed on the front edge side and in the area for said air bag (43) to be inflated and expanded, for being opened when said air bag (43) is inflated and expanded.

2. The head protecting air bag system as claimed in claim 1, **characterized in that**
said front panel portion (24; 54; 64) includes a root portion and a skin for covering a surface of said vehicle interior side of said root portion, **in that**
said skin includes an extension extending backward from said cover portion (26; 56; 66), and **in that**
said extension is attached to said rear pillar portion body while covering said vehicle exterior side of said folded air bag (43).

3. The head protecting air bag system as claimed in claim 1, **characterized in that**
said cover portion (26; 56; 66) includes a front wall portion for covering the front of said folded air bag (43), a bottom portion for covering said vehicle exterior side of said air bag (43), and a rear wall portion for covering a back of said air bag (43).

4. The head protecting air bag system as claimed in claim 3, **characterized in that**
said front wall portion is sloped to spread into said vehicle interior side.

## Patentansprüche

1. Kopfschützendes Airbagsystem, welches aufweist:
eine Hecksäulenverkleidung (23) einschließlich eines Türabschnitts (36; 76);
einen Airbag (43), der in einer gefalteten Form von dem Hecksäulenabschnitt (PR) an der Fahrzeuginnenraumseite bis zu einem Dachlängsträgerabschnitt (R) untergebracht ist und
der einen Abschnitt aufweist, der so aufblasbar und ausdehnbar ist, daß er den oberen Abschnitt an der Innenraumseite der Hecksäulenverkleidung (23) abdeckt, und
einen Gasgenerator (47) zum Versorgen des Airbags (43) mit einem Aufblasgas, der an dem Körper eines Hecksäulenabschnitts (PR) an der Innenraumseite eines Fahrzeugs befestigt ist, **dadurch gekennzeichnet, daß**
- die Hecksäulenverkleidung (23) einen vorderen Verkleidungsabschnitt (24; 54; 64) und einen hinteren Verkleidungsabschnitt (31; 71) aufweist, die einzeln an dem Hecksäulenabschnittkörper angeordnet sind, um eine Vorderkantenseite bzw. eine Hinterkantenseite zu bilden; wobei
- der vordere Verkleidungsabschnitt (24; 54; 64) einen Abdeckabschnitt (26; 56; 66) aufweist, der an der Hinterkantenseite und in einem Bereich, in dem der Airbag (43) aufgeblasen wird und sich ausdehnt, angeordnet ist, um den Airbag (43) daran zu hindern, in den Raum zwischen dem Hecksäulenabschnittskörper und dem vorderen Verkleidungsabschnitt (24; 54; 64) einzudringen; und wobei
- der hintere Verkleidungsabschnitt (31; 71) den Türabschnitt (36; 76) aufweist, der an der Vorderkantenseite und in dem Bereich, in dem der Airbag (43) aufgeblasen wird und sich ausdehnt, angeordnet ist, um geöffnet zu werden, wenn der Airbag (43) aufgeblasen wird und sich ausdehnt.

2. Kopfschützendes Airbagsystem gemäß Anspruch 1, **dadurch gekennzeichnet, daß**
- der vordere Verkleidungsabschnitt (24; 54; 64) einen Grundabschnitt und eine Dekorschicht zum Abdecken einer Oberfläche der Fahrzeuginnenraumseite des Grundabschnitts aufweist, wobei
- die Dekorschicht eine Verlängerung aufweist, die sich von dem Abdeckabschnitt (26; 56; 66) nach hinten erstreckt, und wobei
- die Verlängerung an dem Hecksäulenabschnittskörper befestigt ist, wobei sie die Fahrzeugaußenseite des gefalteten Airbags (43) abdeckt.

3. Kopfschützendes Airbagsystem gemäß Anspruch 1, **dadurch gekennzeichnet, daß**
- der Abdeckabschnitt (26; 56; 66) einen vorderen Wandabschnitt zum Abdecken der Vorderseite des gefalteten Airbags (43), einen unteren Abschnitt zum Abdecken der Fahrzeugaußenseite des Airbags (43) und einen hinteren Wandabschnitt zum Abdecken einer Rückseite des Airbags (43) aufweist.

4. Kopfschützendes Airbagsystem gemäß Anspruch 3, **dadurch gekennzeichnet, daß**
- der vordere Wandabschnitt abgeschrägt ist, um sich in die Fahrzeuginnenraumseite auszubreiten.

## Revendications

1. Système de coussin de sécurité gonflable de protection de la tête, comprenant :
une garniture de montant arrière (23) comprenant une partie de porte (36 ; 76) ;
un coussin de sécurité gonflable (43) logé en une forme repliée, d'une partie de montant arrière (PR) du côté intérieur du véhicule jusqu'à une partie de rail côté toit (R), et comprenant une partie destinée à être gonflée et étendue de manière à couvrir la partie supérieure côté intérieur de ladite garniture de montant arrière (23), et
un dispositif de gonflage (47) pour délivrer un gaz de gonflage audit coussin de sécurité gonflable (43) et monté sur le corps d'une partie de montant arrière (PR) du côté intérieur d'un véhicule, **caractérisé en ce que**
ladite garniture de montant arrière (23) comprend une partie de panneau avant (24 ; 54 ; 64) et une partie de panneau arrière (31 ; 71) montées individuellement sur ledit corps de partie de montant arrière pour réaliser, respectivement, un côté de bord avant et un côté de bord arrière ; **en ce que**
ladite partie de panneau avant (24 ; 54 ; 64) comprend une partie de recouvrement (26 ; 56 ; 66) disposée sur le côté de bord arrière et dans une zone destinée au gonflage et à l'extension dudit coussin de sécurité gonflable (43), pour éviter que ledit coussin de sécurité gonflable (43) n'envahisse l'espace compris entre ledit corps de partie de montant arrière et ladite partie de panneau avant (24 ; 54 ; 64) ; et **en ce que**
ladite partie de panneau arrière (31 ; 71) comprend la partie de porte (36 ; 76) disposée du côté de bord avant et dans la zone destinée au gonflage et à l'extension dudit coussin de sécurité gonflable (43), pour être ouverte lors du gonflage et de l'extension dudit coussin de sécurité gonflable (43).

2. Système de coussin de sécurité gonflable de protection de la tête selon la revendication 1, **caractérisé en ce que**
ladite partie de panneau avant (24 ; 54 ; 64) comprend une partie de base et une peau pour couvrir une surface dudit côté intérieur du véhicule de ladite partie de base, **en ce que**
ladite peau comprend une extension s'étendant vers l'arrière à partir de ladite partie de recouvrement (26 ; 56 ; 66), et **en ce que**
ladite extension est fixée audit corps de partie de montant arrière tandis qu'elle recouvre ledit côté extérieur du véhicule dudit coussin de sécurité gonflable (43) plié.

3. Système de coussin de sécurité gonflable de protection de la tête selon la revendication 1, **caractérisé en ce que**
ladite partie de recouvrement (26 ; 56 ; 66) comprend une partie de paroi avant pour couvrir l'avant dudit coussin de sécurité gonflable (43) plié, une partie inférieure pour couvrir ledit côté extérieur du véhicule dudit coussin de sécurité gonflable (43) et une partie de paroi arrière pour couvrir l'arrière dudit coussin de sécurité gonflable (43).

4. Système de coussin de sécurité gonflable de protection de la tête selon la revendication 3, **caractérisé en ce que**
ladite partie de paroi avant est inclinée afin de s'étendre dans ledit côté intérieur du véhicule.
